(19) Europäisches Patentamt
European Patent Office
Office européen des brevets

(11) EP 1 931 160 A1

(12) **EUROPEAN PATENT APPLICATION**
published in accordance with Art. 153(4) EPC

(43) Date of publication:
**11.06.2008 Bulletin 2008/24**

(21) Application number: **05787739.1**

(22) Date of filing: **30.09.2005**

(51) Int Cl.:
***H04Q 7/38*** *(2006.01)*

(86) International application number:
**PCT/JP2005/018096**

(87) International publication number:
**WO 2007/043098 (19.04.2007 Gazette 2007/16)**

(84) Designated Contracting States:
**DE FR GB**

(71) Applicant: **MITSUBISHI DENKI KABUSHIKI KAISHA**
**Chiyoda-ku, Tokyo 100-8310 (JP)**

(72) Inventor: **NIWANO, Kazuhito**
**Chiyoda-ku, Tokyo 1008310 (JP)**

(74) Representative: **Popp, Eugen**
**MEISSNER, BOLTE & PARTNER**
**Postfach 86 06 24**
**81633 München (DE)**

(54) **MOBILE STATION AND COMMUNICATIONS METHOD**

(57) In order to define uniquely a transmission control operation of a mobile station in accordance with the present invention at the time of a E-DCH transmission and to increase the efficiency of the operation of a communications system, the mobile station includes a transmission control means for, for each of a first physical data channel via which user data transmitted via a transport channel from an upper layer are transmitted to a fixed station and a second physical data channel which is an extension of the first physical data channel, selecting transmission control information including a transmission rate depending upon the user data, a multiplex modulation means for performing multiplex modulation on transmission data by using the transmission control information selected by the transmission control means and the amplitude coefficients of the first physical data channel and the second physical data channel, and a transmit power control means for performing control of the transmit power of a transmitting means which amplifies the transmission data in such a manner that the transmission data has predetermined transmit power, and which transmits the transmission data, and the transmission control means judges whether the transmit power in a case of not transmitting a control channel via which control data about control of the second physical data channel are transmitted exceeds a maximum transmit power value, and selects the transmission control information about the first physical data channel.

FIG.2

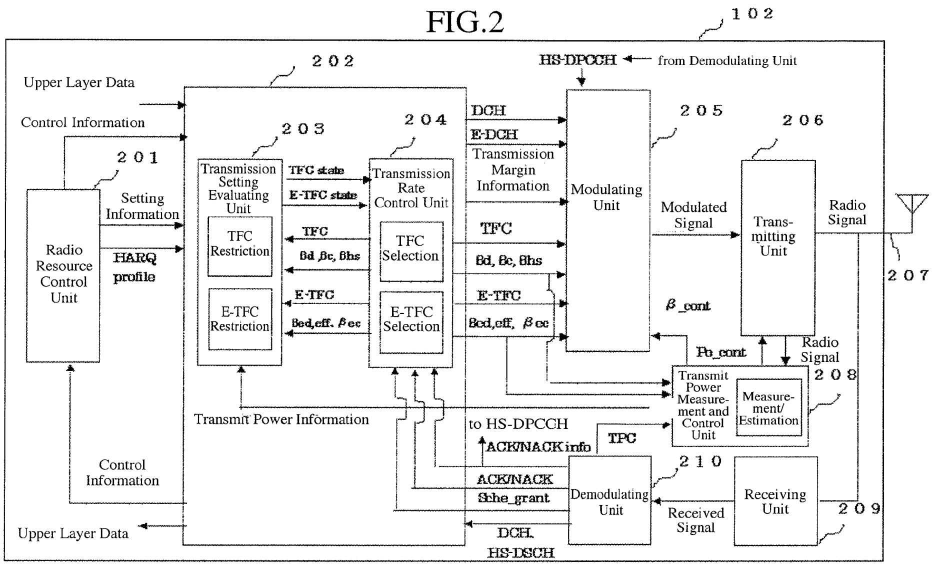


EP 1 931 160 A1

## Description

Field of the Invention

The present invention relates to a mobile station and a communications method which are implemented in a communications system to which a CDMA (Code Division Multiple Access) method is applied. More particularly, it relates to a mobile station and a communications method which are implemented in a mobile communications system in which channels via which high-speed packet data are transmitted in an uplink are set up.

Background of the Invention

In recent years, plural telecommunications standards called third generation are adopted as IMT-2000 by the International Telecommunications Union (ITU) for high-speed CDMA mobile telecommunications methods. For W-CDMA (FDD: Frequency Division Duplex) which is one of the plural telecommunications standards, commercial services were started in Japan in 2001. For W-CDMA systems, the standardization organization 3GPP (3rd Generation Partnership Project) determined the first specification to summarize them as the release 1999th edition (Version name: 3.x.x) in 1999. Currently, release 4 and release 5 are specified as other new versions of the release 1999th edition, and release 6 is under review and being created.

Hereafter, main channels related to specifications released prior to release 5 will be explained below briefly. As physical-layer channels which are individually assigned to a mobile station as release-1999-compliant channels, there are a DPCCH (Dedicated Physical Control CHannel) and a DPDCH (Dedicated Physical Data CHannel). The DPCCH is used for transmission and reception of various pieces of control information for a physical layer (e.g., a pilot signal for synchronization and a transmit power control signal). The DPDCH is used for transmission and reception of various data from a MAC layer (Media Access Control: a protocol layer located above the physical layer). Incidentally, channels used for a transmission of data between the MAC layer and the physical layer is called transport channels (Transport channels). In release 1999, a transport channel which corresponds to the DPDCH which is the physical-layer channel is called a DCH (Dedicated Channel), and a plurality of transport channels can be set up. The above-mentioned DPCCH and DPDCH are set up for both uplink and downlink.

In release 5, an HSDPA (High Speed Downlink Packet Access) technology is introduced in order to achieve increase in the efficiency of a transmission of packets via downlink, and, as physical-layer channels for downlink, an HS-PDSCH (High Speed-Physical Downlink Shared CHannel) and an HS-SCCH (High Speed-Shared Control CHannel) are added. The HS-PDSCH and the HS-SCCH are used by two or more mobile stations. The HS-PDSCH is a channel via which data from the MAC layer are transmitted, like the release-1999-compliant DPDCH. The HS-SCCH is a channel via which control information (e.g., a modulation method of modulating transmission data, and a packet data size) at the time of transmitting data via the HS-PDSCH is transmitted.

The spreading factor of the HS-PDSCH is fixed to 16, and two or more spread codes (i.e., two or more channels) can be assigned to one mobile station at the time of a transmission of packets. It is defined by the 3GPP standards that assignment control (so-called scheduling) is carried out by a base station (i.e., a fixed station in a general communications system). Furthermore, in release 5, an HS-DPCCH (High Speed-Dedicated Physical Control CHannel) is added as a physical-layer channel for uplink. The mobile station transmits a reception judgment result (ACK/NACK) for data sent thereto via the HS-PDSCH, and downlink radio quality information (CQI: Channel Quality Indicator) to the base station using the HS-DPCCH.

The base station transmits HS-PDSCH and HS-SCCH data in a pair. The mobile station receives the HS-PDSCH and HS-SCCH data which are sent from the base station, judges whether the data include any error, and transmits a judgment result (ACK/NACK) using the HS-DPCCH. Therefore, the frequency with which the mobile station transmits ACK/NACK to the base station varies according to the frequency of a downlink transmission of packets. The mobile station also transmits CQI to the base station according to the value of the cycle which is configured (configuration) by the fixed station at an initial stage of communications or during communications, and which is notified to the mobile station.

When transmitting data using the DPDCH, the mobile station piggybacks information about a multiplexing method of the data of one or more DCHs and the size of data per unit time (i.e., a transmission rate) onto the DPCCH, and transmits the information to the receive side to notify it to the receive side. The notification information containing "the multiplexing method of multiplexing data" and "the data size" is called a TFC (Transport Format Combination), and a TFCI (TFC Index) which is the index of the TFC is transmitted to the receive side. When the transmission rate is decided by the TFC, a channel amplitude coefficient (a channel gain factor: $\beta d$) which defines the transmit power of the DPDCH is decided. A set of TFCs which can be provided when a transmission of data is performed is called a TFCS (TFC Set), and is set up between the mobile station and the fixed station at the time of initial settings for communications or during communications. Furthermore, for each of the TFCs, a transition among states (Support, Excess Power, and Block) is defined, and that the state of each TFC (and the transition among states) is determined so that it reflects the state of the transmission is defined in the technical specification TS25.321 (see Chapter 11.4 of nonpatent reference 1: Transport format combination selection in UE, and Figure 11.4.1 of nonpatent reference 1). More specifically, a transition among the states of each TFC for the DPDCH is made to take place by evaluating (Evaluation) the number of unit transmission time intervals (slot: 1/15 of 10 milliseconds) that the total transmit power value (an estimated or actual measurement) of the mobile station reaches a maximum transmit power predetermined value (or a maximum transmit power setting). This is defined by the technical specification TS25.133 (see Chapter 6.4 of nonpatent reference 2: Transport format combination selection in UE, and Chapter 6.4.2 of nonpatent reference 2: Requirements).

[Nonpatent reference 1] 3rd Generation Partnership Project; Technical Specification Group Radio Access Network; Medium Access Control (MAC) protocol specification (Release 5) 3GPP TS 25.321 V5.9.0 (2004-06)

[Nonpatent reference 2] 3rd Generation Partnership Project; Technical Specification Group Radio Access Network; Requirements for support of radio resource management (FDD) (Release 5) 3GPP TS 25.133 V5.12.0 (2004-09)

Release 1999 is decided by mainly assuming transmission and reception of continuous data like voice calls. In release 5, HSDPA which makes it possible to carry out downlink high-speed packet communications is added, though no specifications assuming uplink high-speed packet communications are developed but the release 1999 specifications are applied just as they are. Therefore, also in a case in which an uplink burst (Burst) transmission like a transmission of packet data from a mobile station to a base station is carried out, dedicated channels (DCH and DPDCH) for exclusive use must be assigned to each mobile station all the time. Therefore, by taking into consideration an increase in demand of an uplink transmission of packet data which is caused by the widespread use of the Internet, there is a problem from the viewpoint of the effective use of the radio resources.

Furthermore, a data transmission from a mobile station is performed through autonomous transmission control (Autonomous Transmission) by the mobile station. In this case, the transmission timing from each mobile station is defined arbitrarily (or at a statistically random). In the system in which the mobile station carries out the autonomous transmission control, and, the mobile station is carrying out the data transmission, the fixed station is not concerned about the transmission timing of the mobile station. In a communication system to which the CDMA communications method is applied, although transmissions from other mobile stations all serve as a source of interference, a fixed station which manages the radio resources can carry out a prediction (or management) of the amount of interference noises and an amount of variations in the amount of interference noises for the base station’s reception only with statistical methods. Thus, because the fixed station which manages the radio resources in the communications system using the CDMA communication method is not concerned about the transmission timing of each mobile station and cannot predict correctly the amount of interference noises, the fixed station carries out radio resource assignment control which ensures a sufficient margin by assuming a case in which the amount of variations in the interference noise amount is large. Such radio resource management by a fixed station is carried out by not a base station itself, but a base station control apparatus (RNC: Radio Network Controller) which manages two or more base stations.

The radio resource management which the base station control apparatus (RNC) carries out for mobile stations and notifications which accompany the radio resource management need a relatively-long processing time (of the order of several 100 milliseconds). For this reason, no appropriate control of the assignment of the uplink radio resources according to a rapid change in the radio transmission environment, the transmission states of other mobile stations (= the amount of interference from other mobile stations), etc. cannot be carried out. Therefore, in release 6, an E-DCH (Enhanced DCH) technology is introduced and its detailed specifications are defined in order to implement the effective use of the radio resources and high-speed assignment of the radio resources. The E-DCH technology may be called HSUPA (High Speed Uplink Packet Access). In the E-DCH technology, not only an AMC (Adaptive Modulation and Coding) technology, an HARQ (Hybrid Automatic Repeat reQuest) technology, etc. which are introduced for HSDPA in release 5, but also a short transmission time interval (TTI: Transmission Time Interval) can be used. The E-DCH means a transport channel which is an extension of a DCH which is a transport channel which complies with the conventional standards, and is set up independently of the DCH.

For the E-DCH, the fixed station carries out uplink radio resource control which is called "scheduling." Because the electric wave propagation environment and so on differ between uplinks and downlinks, the scheduling differs from the scheduling for the HSDPA. The mobile station carries out control of a transmission of data on the basis of scheduling results notified from the fixed station. The fixed station transmits a judgment result (ACK/NACK) for the received data to the mobile station. A base station (referred to as NodeB in 3GPP) is defined as an apparatus which is included in the fixed station and which carries out the scheduling. An example of a concrete method of carrying out scheduling for a E-DCH in a base station is disclosed by, for example, JP,2004-215276,A (patent reference 1). Furthermore, TS25.309v6.3.0 (nonpatent reference 3) is provided as the technical specification (Technical Specification) of 3GPP which is created for a E-DCH.

[Patent reference 1] JP,2004-215276,A

[Nonpatent reference 3] 3rd Generation Partnership Project Technical Specification Group Radio Access Network; FDD Enhanced Uplink; Overall description; Stage 2 (Release 6) 3GPP TS 25.309 V6.3.0 (2005-06)

In release 6, a E-DPDCH (Enhanced-DPDCH) and a E-DPCCH (Enhanced-DPCCH) are added as uplink physical channels for E-DCH. The E-DPDCH and the E-DPCCH are the physical channels which correspond to the DPDCH and the DPCCH which comply with release 5 and earlier standards, the E-DPDCH is a channel via which data from the MAC layer are transmitted, and the E-DPCCH is a channel via which control information is transmitted. Furthermore, as in the case of TFC for DPDCH, E-TFC (Enhanced-TFC) which defines the transmission rate is used. A gain factor (βed) for E-DPDCH is decided on the basis of the transmission rate. In addition, in release 6, as downlink physical channels for E-DCH, a E-AGCH (Enhanced-Absolute Grant CHannel) and a E-RGCH (Enhanced-Relative Grant CHannel) via which scheduling results are notified, and a E-HICH (E-DCH HARQ Acknowledgement Indicator CHannel) via which a reception judgment result (ACK/NACK) is notified are added.

It is decided that at the time of a data transmission from a mobile station, E-DCH and DCH data are treated as independent data streams (Data Stream), and a higher priority is given to a DCH transmission than to a E-DCH transmission. Thus, because E-DCH data are a data stream which is independent of DCH data and a higher priority is given to a DCH transmission than to a E-DCH transmission, the mobile station ensures transmit power required for the DCH transmission, selects a E-TFC within the limits of a remaining transmit power margin, and then carries out a transmission of E-DCH data. In above-mentioned nonpatent reference 3, a state (a blocked state or a supported state) is defined for a E-TFC, as in the case of a TFC.

Disclosure of the Invention

Problems to be Solved by the Invention

Hereafter, a problem with uplink transmission control which arises due to the addition of the E-DCH will be explained. According to nonpatent reference 3 (TS25.309), the transmission rate (E-TFC) at the time of a E-DCH transmission is determined on the basis of margin power (a transmit power margin) which is provided after power required for a DCH transmission is ensured from the maximum total transmit power of the mobile station. Furthermore, the state of the E-TFC is changed on the basis of the margin of the transmit power . A problem is, however, that because no detailed criterion by which to determine the transition of the state of the E-TFC is defined, a mobile station in the communications system does not perform any transition operation uniquely and therefore the operation of the communications system becomes unstable and inefficient. Furthermore, a criterion by which to determine a E-TFC at the time of a E-DCH transmission is also indefinite. Another problem is therefore that because any detailed specifications for the E-TFC determination process are unknown, any real-world apparatus cannot be created.

It is therefore an object of the present invention is to provide a mobile station and a communications method which solve the problems caused by the addition of the E-DCH, and which perform uplink transmission control and radio resources control appropriately.

Means for Solving the Problems

A mobile station in accordance with the present invention includes: a transmission control means for, for each of a first physical data channel via which user data transmitted via a transport channel from an upper layer are transmitted to a fixed station and a second physical data channel which is an extension of the first physical data channel, selecting transmission control information including a transmission rate depending upon the user data; a multiplex modulation means for performing multiplex modulation on transmission data by using the transmission control information selected by the transmission control means and amplitude coefficients of the first physical data channel and the second physical data channel; and a transmit power control means for performing control of transmit power of a transmitting means which amplifies the transmission data in such a manner that the transmission data has predetermined transmit power, and which transmits the transmission data, and the transmission control means judges whether the transmit power at a time of not transmitting a control channel via which control data about control of the second physical data channel are transmitted exceeds a maximum transmit power value, and selects transmission control information about the first physical data channel.

A communications method in accordance with the present invention includes: a transmission control information selection process of, for each of a first physical data channel via which user data transmitted via a transport channel from an upper layer are transmitted to a fixed station and a second physical data channel which is an extension of the first physical data channel, selecting transmission control information including a transmission rate depending upon the user data; a multiplex modulation process of performing multiplex modulation on transmission data by using the transmission control information selected in the transmission control information selection process and amplitude coefficients of the first physical data channel and the second physical data channel; and a transmit power control process of performing transmit power control in such a manner that the transmission data has predetermined transmit power, and the transmission control information selection process is the one of judging whether the transmit power at a time of not transmitting a control channel via which control data about control of the second physical data channel are transmitted exceeds a maximum transmit power value, and selecting transmission control information about the first physical data channel.

Advantages of the Invention

The mobile station in accordance with the present invention includes: the transmission control means for, for each of the first physical data channel via which user data transmitted via the transport channel from the upper layer are transmitted to the fixed station and the second physical data channel which is an extension of the first physical data channel, selecting transmission control information including the transmission rate depending upon the user data; the multiplex modulation means for performing multiplex modulation on transmission data by using the transmission control information selected by the transmission control means and the amplitude coefficients of the first physical data channel and the second physical data channel; and the transmit power control means for performing control of the transmit power of the transmitting means which amplifies the transmission data in such a manner that the transmission data has the predetermined transmit power, and which transmits the transmission data, and the transmission control means judges whether the transmit power at the time of not transmitting the control channel via which the control data about control of the second physical data channel are transmitted exceeds the maximum transmit power value, and selects transmission control information about the first physical data channel. Therefore, the present invention provides an advantage of being able to make the mobile station perform a transmission control operation uniquely at the time of E-DCH transmission, thereby increasing the efficiency of the operation of the communications system.

The communications method in accordance with the present invention includes: the transmission control information selection process of, for each of the first physical data channel via which user data transmitted via the transport channel from the upper layer are transmitted to the fixed station and the second physical data channel which is an extension of the first physical data channel, selecting transmission control information including the transmission rate depending upon the user data; the multiplex modulation process of performing multiplex modulation on the transmission data by using the transmission control information selected in the transmission control information selection process and the amplitude coefficients of the first physical data channel and the second physical data channel; and the transmit power control process of performing transmit power control in such a manner that the transmission data has the predetermined transmit power, and the transmission control information selection process is the one of judging whether the transmit power at the time of not transmitting the control channel via which control data about control of the second physical data channel are transmitted exceeds the maximum transmit power value, and selecting transmission control information about the first physical data channel. Therefore, the present invention provides an advantage of being able to make the mobile station perform a transmission control operation uniquely at the time of E-DCH transmission, thereby increasing the efficiency of the operation of the communications system.

Brief Description of the Figures

[Fig. 1] Fig. 1 is an explanatory drawing explaining a radio communications system in accordance with the present invention;

[Fig. 2] Fig. 2 is a block diagram showing the structure of a mobile station in accordance with Embodiment 1 of the present invention;

[Fig. 3] Fig. 2 is a block diagram showing the structure of a fixed station (a base station and a base station control apparatus) in accordance with Embodiment 1 of the present invention;

[Fig. 4] Fig. 4 is a flow chart explaining the whole of a transmission control process carried out by the mobile station in accordance with Embodiment 1 of the present invention;

[Fig. 5] Fig. 5 is a flow chart explaining a transmission control process for DCH carried out by the mobile station in accordance with Embodiment 1 of the present invention;

[Fig. 6] Fig. 6 is a flow chart explaining a process of checking a transmit power margin for DCH transmission which is carried out by the mobile station in accordance with Embodiment 1 of the present invention;

[Fig. 7] Fig. 7 is a flow chart explaining a process of evaluating the state of a TFC (TFC restriction) which is carried out by the mobile station in accordance with Embodiment 1 of the present invention;

[Fig. 8] Fig. 8 is a flow chart explaining a process of controlling a E-DCH transmission which is carried out by the mobile station in accordance with Embodiment 1 of the present invention;

[Fig. 9] Fig. 9 is a flow chart explaining a process of checking a transmit power margin for E-DCH transmission which is carried out by the mobile station in accordance with Embodiment 1 of the present invention;

[Fig. 10] Fig. 10 is a flow chart explaining a process of evaluating the state of a E-TFC (E-TFC restriction) which is carried out by the mobile station in accordance with Embodiment 1 of the present invention;

[Fig. 11] Fig. 11 is a flow chart explaining a E-TFC selection process carried out by the mobile station in accordance with Embodiment 1 of the present invention;

[Fig. 12] Fig. 12 is a flow chart explaining a transmit power control process carried out by the mobile station in accordance with Embodiment 1 of the present invention;

[Fig. 13] Fig. 13 is a diagram explaining a relation between a setting of maximum transmit power and transmit power in the mobile station in accordance with Embodiment 1 of the present invention;

[Fig. 14] Fig. 14 is a diagram explaining a relation between a setting of the maximum transmit power and the transmit power in the mobile station in accordance with Embodiment 1 of the present invention;

[Fig. 15] Fig. 15 is a diagram explaining a relation between a setting of the maximum transmit power and the transmit power in the mobile station in accordance with Embodiment 1 of the present invention;

[Fig. 16] Fig. 16 is an explanatory drawing explaining definitions of the maximum transmit power of the mobile station in accordance with Embodiment 1 of the present invention;

[Fig. 17] Fig. 17 is an explanatory drawing explaining definitions of the maximum transmit power of a mobile station in accordance with Embodiment 2 of the present invention;

[Fig. 18] Fig. 18 is a flow chart explaining a process of evaluating the state of a E-TFC (E-TFC restriction) which is carried out by a mobile station in accordance with Embodiment 3 of the present invention;

[Fig. 19] Fig. 19 is a flow chart explaining a process of evaluating the state of a E-TFC (E-TFC restriction) which is carried out by a mobile station in accordance with Embodiment 4 of the present invention;

[Fig. 20] Fig. 20 is a flow chart explaining a transmission control process carried out by a mobile station in accordance with Embodiment 5 of the present invention;

[Fig. 21] Fig. 21 is a flow chart explaining a transmit power control process carried out by the mobile station in accordance with Embodiment 5 of the present invention;

[Fig. 22] Fig. 22 is a block diagram showing the structure of a mobile station in accordance with Embodiment 6 of the present invention;

[Fig. 23] Fig. 23 is a flow chart explaining a transmit power control process carried out by a mobile station in accordance with Embodiment 7 of the present invention; and

[Fig. 24] Fig. 24 is a flow chart explaining the whole of a transmission control process carried out by a mobile station in accordance with Embodiment 8 of the present invention.

Explanation of reference numerals

101; Communications system, 102; Mobile station, 103; Base station, 104; Base station control apparatus,
105; Communication network, 106; DPCCH, 107; DPCCH,
108; DPDCH, 109; DPDCH, 110; HS-DPCCH,
111; HS-PDSCH/HS-SCCH,
112; E-DPDCH/E-DPCCH, 113; E-HICH,
114; E-AGCH/E-RGCH, 201; Radio resource control unit,
202; Media access control unit, 205; Modulating unit, 206 Transmitting unit,
208; Transmit power measurement and control unit, 209; Receiving unit, 210; Demodulating unit,
301; Radio resource control unit, 302; Media access control unit, 305; Modulating unit,
306; Transmitting unit, 309; Receiving unit, 310; Demodulating unit

Preferred Embodiments of the Invention

Embodiment 1.

An invention in accordance with Embodiment 1 will be explained with reference to drawings. First of all, the structure of each unit of a communications system is shown with reference to Figs. 1 to 3. Next, a flow of transmission control of a mobile station will be shown with reference to Figs. 4 to 12.

Fig. 1 is an explanatory drawing explaining the radio communications system in accordance with the present invention. In Fig. 1, the radio communications system 101 is comprised of a mobile station 102, a base station 103, and a base station control apparatus 104. The base station 103 covers a specific communications area (generally called a sector or cell), and carries out communications with a plurality of mobile stations 102. In Fig. 1, only one mobile station 102 is shown for the sake of simplicity. Communications are carried out between the mobile station 102 and the base station 103 using one or a plurality of radio links (or channels). The base station control apparatus 104 communicates with two or more base stations 103, and is also connected to an exterior communication network 105, such as a public telephone network or the Internet, and relays packet communications between the base station 103 and the communication network 105. In Fig. 1, only one base station 103 is shown for the sake of simplicity. In the W-CDMA standards, the above-mentioned mobile station 102 is called UE (User Equipment), the above-mentioned base station 103 is called Node-B, and the above-mentioned base station control apparatus 104 is called RNC (Radio Network Controller).

An uplink DPCCH (Dedicated Physical Control CHannel) 106 is a physical control channel (Physical Control Channel) from the mobile station 102, and a downlink DPCCH 107 is a physical control channel from the base station 103. Synchronous control of the transmit-receive timing between the mobile station 102 and the base station 103, and so on are carried out using the two above-mentioned DPCCHs (106 and 107), so that a physical radio link between the mobile station and the base station during communications is maintained. The uplink DPCCH 106, an uplink DPDCH 108, an uplink HS-DPCCH 110, the downlink DPCCH 107, a downlink DPDCH 109, and a downlink HS-PDSCH/HS-SCCH 111 are channels according to release 5 or earlier standards. Uplink E-DPDCH/E-DPCCH 112 are physical channels for E-DCH transmission. Because data are basically transmitted via the E-DPDCH/E-DPCCH 112 in the form of a pair, the following explanation will be made focusing on the E-DPDCH, though a reference will also be made to the E-DPCCH when necessary.

A downlink E-HICH 113 is a channel for notifying a judgment result (ACK/NACK) of reception of E-DCH data by the base station 103 to the mobile station 102. A downlink E-AGCH/E-RGCH 114 is a channel for notifying a scheduling result for E-DCH. As an expression form of radio resource allocation results, rate information (e.g., a E-TFC or a maximum transmission rate setting value), power information (e.g., maximum transmit power or a ratio of the maximum transmit power), or channel amplitude information (a channel amplitude coefficient or a ratio of the channel amplitude coefficient) can be provided.

Fig. 2 is a block diagram showing the structure of the mobile station in accordance with embodiment 1 of the present invention. Hereafter, the internal structure of the mobile station (e.g. , functional blocks, and a flow of data and control signals) will be explained with reference to Fig. 2. A radio resource control unit 201 controls each unit disposed within the mobile station in order to perform various settings, such as a combination of channels required for transmission and reception, and a transmission rate. The radio resource control unit 201 also outputs communication setting information (CH_config) and QoS information (HARQ profile). Maximum total transmit power setting information, channel amplitude coefficient (gain factors) setting information of each channel, transmission timing setting information, transmission rate setting (TFCS, E-TFCS), etc. are included in the various pieces of communication setting information (CH_config). The various pieces of communication setting information (CH_config) are notified from a fixed station side (including the base station control apparatus 104 and the base station 103) to the mobile station 102 (the notification is referred to as an RRC signaling in W-CDMA systems), at an initial stage in the process of starting communications or during communications, and are then stored in the radio resource control unit 201 by way of an antenna 207, a receiving unit 209, a demodulating unit 210, and a media access control unit 202. The radio resource control unit 201 piggybacks, as data, an exchange (an RRC signaling) of information between itself and the radio resource control unit of the fixed station side (the base station control apparatus 104 and the base station 103), which will be mentioned later, onto the DPDCH. In an exchange (an RRC signaling) of information between the radio resource control units, when no DPDCH is set up at a setting time of an initial stage in the process of starting communications, data can be piggybacked onto FACH/RACH channels (not shown), whereas when no downlink DPDCH is set up even during communications, data can be piggybacked onto the HS-PDSCH (in the case of downlink). In this embodiment, the operation of the mobile station during communications will be explained, and a case in which data are piggybacked onto the DPDCH will be explained.

A transmission setting evaluating unit 203 has a function of evaluating TFCs for DCH and E-TFCs for E-DCH, setting some states including "supported state" (Supported State), and restricting available transmission rates (TFC/E-TFC restriction function). Focusing the evaluation of E-TFCs for E-DCH, the transmission setting evaluating unit 203 performs an evaluation of the transmission status using a E-TFC restriction functional block (E-TFC Restriction) from the various pieces of communication setting information (CH_config) inputted from the radio resource control unit 201, E-TFCs and gain factors (βed, eff and βec) from a transmission rate control unit 204, and transmit power information (UE transmit power info) inputted from a transmit power measurement and control unit 208, and controls a transition between an enable state and a disable state of each E-TFC. The transmission setting evaluating unit also outputs the evaluation results to the transmission rate control unit 204 as state information (E-TFC_state) of each E-TFC. The transmission setting evaluating unit similarly makes an evaluation of TFCs for DCH using the various pieces of setting information (CH_config) inputted from the radio resource control unit 201, TFCs and gain factors from the transmission rate control unit 203, and the transmit power information (UE transmit power info) inputted from the transmit power measurement and control unit 208, controls a transition between an enable state and a disable state of each TFC, and outputs the evaluation results to the transmission rate control unit 204 as state information (TFC_state) of each TFC.

The transmission rate control unit 204 has a function (E-TFC selection) of selecting a E-TFC which the transmission rate control unit uses at the time of a E-DCH data transmission. The transmission rate control unit 204 determines a E-TFC which the transmission rate control unit uses at the time of an actual data transmission on the basis of the state information (E-TFC_state) inputted from the transmission setting evaluating unit 203 and scheduling result information (Sche_grant) which is separated from received E-AGCH/E-RGCH data, and outputs an effective E-DPDCH gain factor (βed,eff) and an E-DPCCH gain factor (βec) to both the transmission setting evaluating unit 203 and a modulating unit 205. The transmission rate control unit 204 uses the scheduling result information transmitted from the fixed base station, has a maximum of available uplink radio resources (for example, a channel power ratio of E-DPDCH) as an internal variable (Serving_grant), and carries out a E-TFC selection so that E-DPDCH data with a higher priority can be transmitted within the limits of the available uplink radio resources. The transmission rate control unit 204 can output βed, which is calculated on the basis of the transmission rate (E-TFC), and a power offset (ΔE-DPDCH) whose maximum is selected on the basis of the QoS of transmission data multiplexed, instead of the effective gain factor βed,eff. When there exist other physical channel data to be simultaneously transmitted, the transmission rate control unit 204 outputs information about the TFC which has been selected for DCH and the gain factors (βd, βc, and βhs) of the various channels (the DPDCH, the DPCCH, and the HS-DPCCH) to both the transmission setting evaluating unit 203 and the modulating unit 205.

Even if the transmission rate control unit outputs power offset information which is based on the transmit power of the DPCCH channel instead of the gain factor for HS-PDSCH (βhs), the mobile station can operate in the same way. A transmission control means is comprised of the radio resource control unit 201, the transmission setting evaluating unit 203, and the transmission rate control unit 204, which are mentioned above. The transmission setting evaluating unit 203 and the transmission rate control unit 204 construct a part of the media access control unit 202. The media access control unit 202 accepts the transmission data (DTCH) from a higher-level protocol layer (not shown), and control information (RRC_signaling (DCCH)), assigns the data to the DCH or E-DCH according to a channel setup and so on, and outputs the data, as channel data, to the modulating unit 205.

The modulating unit 205 multiplexes uplink channels (DPDCH, DPCCH, HS-DPCCH, E-DPDCH, and E-DPCCH) data, which are to be actually transmitted, on the basis of the inputted various transmission rate settings (TFC and E-TFC) and the gain factors (βd, βc, βhs, βed,eff, and βec) by using a known technique which is so-called quadrature multiplexing (IQ multiplexing). By using a known technique, the modulating unit further performs a spread-spectrum modulation process on the multiplexed transmission data and outputs a modulated signal (Mod_signal) . At this time, the modulating unit controls its modulation operation according to a control signal (β_cont), which will be mentioned later, from the transmit power measurement and control unit 208 if needed. The modulating unit 204 constructs a multiplex modulation means.

A transmitting unit 206 converts the inputted modulated signal (Mod_signal) into a radio frequency signal by using a known technique and, after that, amplifies the radio frequency signal so that the radio frequency signal has required power, and then outputs the radio frequency signal as a radio signal (RF_signal). While the radio signal (RF_signal) is transmitted by radio from the antenna 207, the radio signal is also outputted to the transmit power measurement and control unit 208. The transmitting unit 206 also adjusts the power of the radio signal (RF_signal) according to transmit power control information (Po_cont) from the transmit power measurement and control unit 208.

The transmit power measurement and control unit 208 carries out transmit power control on the basis of the gain factors (βd, βc, βhs, βed,eff, and βec) inputted from the transmission rate control unit 204, and outputs the transmit power control information (Po_cont) to the transmitting unit 206. The transmit power measurement and control unit 208 has a function of measuring or estimating the transmit power of each channel and total transmit power. From the radio signal (RF_signal) outputted from the transmitting unit 206, the transmit power measurement and control unit measures (or estimates) each channel's average power or average total transmit power which is averaged within a predetermined time period (in the case of W-CDMA, one frame (frame), one transmission time interval (Transmit Time Interval)), one slot (slot), or the like is defined as the predetermined time period), and outputs the transmit power information (UE transmit power info) to the transmission setting evaluating unit 203. A transmitting means is comprised of the transmitting unit 206, the antenna 207, and the transmit power measurement and control unit 208, which are mentioned above.

The receiving unit 209 inputs a downlink radio signal (RF_signal) received by the antenna 207, performs frequency conversion and de-spreading on the radio signal by using a known technology, and outputs a demodulation signal (Demod_signal). The demodulating unit 210 inputs the demodulation signal (Demod_signal), and demultiplexes the demodulation signal into data associated with the various downlink physical channels by using a known technique. Concretely, the demodulating unit 210 extracts control information, which is required to demodulate the DPDCH data, from DPCCH data, demodulate the DPDCH data, and outputs DCH data. The demodulating unit also extracts a transmit power control signal (TPC) for uplink, and outputs the transmit power control signal to the transmit power measurement and control unit 208. The demodulating unit 210 further extracts HS-DSCH data from the HS-PDSCH, and outputs the HS-DSCH data to the media access control unit 202. When receiving HS-DSCH data, the demodulating unit 210 also performs a reception judgment and outputs a judgment result (ACK/NACK) to the transmission rate control unit 204 while piggybacking the judgment result onto the uplink HS-DPCCH. This reception judgment result (ACK/NACK) is transmitted, as HS-DPCCH data, to the base station 103 by way of the modulating unit 205, the transmitting unit 206, and the antenna 207. The demodulating unit 210 further extracts judgment result (ACK/NACK) information on a result of a judgment of reception of E-DCH data by the base station from received E-HICH data, and outputs the judgment result information to the transmission rate control unit 204. The demodulating unit also extracts scheduling result information (Sche_grant) information from received E-AGCH/E-RGCH data, and outputs the scheduling result information to the transmission rate control unit 204. When control information (RRC_signaling: DCCH) including setting information (CH_config) etc. is included in the DCH data or HS-PDSCH data inputted from the demodulating unit 209, the media access unit 202 extracts the control information from the data and outputs the control information to the radio resource control unit 201. When the inputted DCH data or HS-PDSCH data are data associated with a higher-level protocol layer (not shown), the media access control unit 202 outputs the inputted data to the higher-level protocol layer as upper layer data (DTCH).

Fig. 3 is a block diagram showing the structure of the fixed station side in accordance with Embodiment 1 of the present invention. Hereafter, the internal structure of the fixed station side(functional blocks, and a flow of data and control signals) will be explained with reference to Fig. 3. The same names as those shown in Fig. 2 are given to blocks having the functions corresponding to those shown in the figure of the internal blocks of the mobile station shown in Fig. 2. Each block included in the fixed station side represents a logical functional unit (entity), and assume that each block exists in one of both the base station 103 and the base station control apparatus 104 or an independent another apparatus according to the implementation of the base station 103 and the base station control apparatus 104. According to the 3GPP standards, the fixed station, which is a combination of the base station control apparatus (RNC) and the base station (NodeB), is called UTRAN (Universal Terrestrial Radio Access Network).

The radio resource control unit 301 controls each unit disposed in the fixed station in order to control various settings like a combination of channels required for transmission and reception to and from the mobile station 102, and the transmission rate. The radio resource control unit 301 also outputs various pieces of setting information (CH_config) . An amplitude coefficient setting, a transmission timing setting, HARQ profile information, a transmission rate setting (TFCS, E-TFCS), etc. of each channel are included in the above-mentioned various pieces of setting information (CH_config). The above-mentioned various pieces of setting information (CH_config) are transmitted from the base station control apparatus 104 to the mobile station 102 via the base station 103 at an initial stage in the process of starting communications or during communications. The radio resource control unit 301 outputs, as control information (RRC_signalling), the above-mentioned various pieces of setting information (CH_config) which the radio resource control unit transmits and receives to and from the mobile station. The radio resource control unit also inputs mobile station control information (RRC_signalling) received from the mobile station 102 from a media access control unit 302 which will be mentioned later. In an exchange (RRC signalling) of information between the radio resource control units, when no DPDCH is set up at a setting time of an initial stage of communications, data can be piggybacked onto the FACH/RACH channels (not shown), whereas when no downlink DPDCH is set up even during communications, data can be piggybacked onto the HS-PDSCH (in the case of downlink). In this embodiment, the operation of the fixed station during communications will be explained, and a case in which data are piggybacked onto the DPDCH will be explained.

A transmission setting evaluating unit 303 controls downlink transmissions on the basis of the various pieces of setting information (CH_config) inputted from the radio resource control unit 301. The transmission setting evaluating unit 303 has a function (TFC Restriction) of evaluating the state of each TFC of the downlink DPDCH and restricting available transmission rates, and outputs information (TFC_state) about the evaluated state to a transmission rate control unit 304. The transmission rate control unit 304 has a transmission rate determination (TFC Selection) function of selecting one TFC which the transmission rate control unit uses at the time of a DCH data transmission, a downlink scheduling (HSDPA scheduling) function for HSDPA data transmission, and an uplink scheduling (E-DCH scheduling) function for E-DCH data transmission. The transmission rate control unit 304 further determines one TFC which the transmission rate control unit uses at the time of an actual transmission on the basis of the newest state information (TFC_state) inputted from the transmission setting evaluating unit 303, and outputs information (TFC) about the selected TFC and the gain factors (βd and βc) of each channel. In this case, βd is used for the DPDCH and βc is used for the DPCCH. While inputting an HSDPA packet reception judgment result (ACK/NACK) transmitted from the mobile station 102 from a demodulating unit 310 which will be mentioned later and using it for the above-mentioned scheduling for HSDPA, the transmission rate control unit outputs scheduling result information (Sche_info) to a modulating unit 305. A transmission control means is comprised of the radio resource control unit 301, the transmission setting evaluating unit 303, and the transmission rate control unit 304, which are explained above. The transmission setting evaluating unit 303 and the transmission rate control unit 304 construct a part of the media access unit control 302. The media access control unit 302 inputs transmission data (DTCH) from a higher-level protocol layer (not shown), and control information (RRC_signalling (DCCH)) from the radio resource control unit 301, and assigns the data to the DCH or HS-DSCH according to a channel setup etc. and outputs the data to the modulating unit 305.

The modulating unit 305 multiplexes downlink physical channel (DPDCH, DPCCH, HS-PDSCH, AGCH/RGCH, and E-HICH) data which are to be actually transmitted by using a known technique, like a so-called quadrature multiplexing method, on the basis the TFC information (TFC) inputted from the transmission rate control unit 304, the amplitude information (βd and βc) about each of the channels, the scheduling result information for HSDPA (Sche_info), and the scheduling information for E-DCH (Sche_grant). The modulating unit further performs a spreading process and a modulation process on the data using a known technique, and outputs a modulated signal (Mod_signal). A transmitting unit 306 converts the inputted modulated signal (Mod_signal) into a radio frequency signal by using a known technique and, after that, amplifies the radio frequency signal so that the radio frequency signal has required power, and then outputs the radio signal (RF_signal). The radio signal (RF_signal) is transmitted by radio, as downlink physical channel (DPCCH 107, DPDCH 109, HS-PDSCH 111, E-HICH 113, and E-AGCH/E-RGCH 114) data, from an antenna 307.

A receiving unit 309 inputs an uplink radio signal (RF_signal) received by the antenna 307, performs frequency conversion and de-spreading on the radio signal by using a known technique, and outputs a demodulation signal (Demod_signal). A demodulating unit 310 inputs the demodulation signal (Demod_signal), and demultiplexes the demodulation signal into data associated with the various uplink channels (DPCCH, DPDCH, HS-DPCCH, E-DPDCH, and E-DPCCH) by using a known technique. The demodulating unit 310 extracts control information required for DPDCH demodulation from the DPCCH data, demodulates the DPDCH data, and outputs DCH data. The demodulating unit 310 further demultiplexes the HS-DPCCH data into an HS-PDSCH reception judgment result (ACK/NACK) and downlink quality information (CQI), and outputs them to a scheduler for HSDPA of the transmission rate control unit 304. The demodulating unit also extracts control information required for E-DPDCH demodulation from the E-DPCCH data, demodulates the E-DPDCH data, and outputs E-DCH data. The demodulating unit further piggybacks, as E-HICH data, a demodulation judgment result (ACK/NACK info) for E-DPDCH onto the E-HICH. When control information (RRC_signalling) including setting information (CH_config) etc. is included in the DCH data or E-DCH data inputted from the demodulating unit 309, the media access control unit 302 extracts the control information and outputs this information to the radio resource control unit 201. When the inputted DCH data or E-DCH data are data associated with a higher-level protocol layer (not shown), the media access control unit 302 outputs them to the higher-level protocol layer as upper layer data (DTCH).

Next, transmission control for both the DCH and the E-DCH by the mobile station 102 will be explained with reference to the structure of the communications system shown in above-mentioned Figs. 1 to 3 and process flows shown in Figs. 4 to 12. Fig. 4 is a flow chart explaining the whole of a DCH/E-DCH transmission control process carried out by the mobile station in accordance with Embodiment 1 of the present invention. In Fig. 4, TFC restriction step 402 corresponds to a TFC restriction process of the transmission setting evaluating unit 203 of the mobile station, TFC selection step 403 corresponds to a TFC selection process of the transmission rate control unit 204, E-TFC restriction step 405 corresponds to a E-TFC restriction process of the transmission setting evaluating unit 203 of the mobile station, and E-TFC selection step 406 corresponds to a E-TFC selection process of the transmission rate control unit 204. The temporal sequence of the processes in TFC restriction step, TFC selection step, E-TFC restriction step, and E-TFC selection step can be derived from nonpatent reference 3. A detailed transmission control flow will be explained with reference to Fig. 5 and subsequent figures, and a whole flow will be explained with reference to Fig. 4. First, it is judged whether there are any data which are to be transmitted while being piggybacked onto the DCH during the next transmission time interval (TTI) of the DCH. Judgment of whether or not the DCH has been set up is also included in this judgment. As described in nonpatent reference 3, higher priority is given to the ensuring of uplink radio resources for DCH transmission than to the ensuring of radio resources for E-DCH transmission. When the judgment result shows YES, the sequence is shifted to next step 402. In contrast, when the judgment result shows NO, the process about the DCH is omitted and the sequence is then shifted to step 404 (step 401) . Next, for each of one or more transmission rates (TFC) for DCH transmission, a state is determined and available transmission rates are restricted (step 402). Next, one transmission rate (TFC) which is to be used is determined out of the available transmission rates (TFC) for DCH which are restricted in step 402 (step 403) . It is further judged whether there are any data which are to be transmitted via the E-DCH at the next transmission timing (TTI) for the E-DCH. Judgment of whether the E-DCH has been set up is also included in this judgment. When the judgment result shows YES, the sequence is shifted to next step 405. In contrast, when the judgment result shows NO, the process about the E-DCH is omitted and the sequence is shifted to step 407 (step 404).

Next, for each of one or more transmission rates (E-TFC) for E-DCH transmission, a state is determined and available transmission rates are restricted (step 405). Next, one transmission rate (E-TFC) which is to be used is determined out of the available transmission rates for E-DCH restricted in step 405 (step 406). Next, channel power required for the DPDCH and channel power required for the E-DPDCH, and the total transmit power are controlled on the basis of the TFC and the E-TFC which are determined as above. At this time, when the total transmit power estimated exceeds maximum total transmit power (Pmax), it is checked to see whether the total transmit power can be reduced to be equal to or smaller than the maximum total transmit power (Pmax) by lowering the gain factor of only the E-DPDCH. When the DCH is set up, the minimum of the gain factor $\beta$ed,eff of the E-DPDCH can be reduced to zero. In contrast, when no DCH is set up, the gain factor $\beta$ed,eff can be reduced to its preset minimum. When the gain factor $\beta$ed,eff of the E-DPDCH is set to zero, E-DPDCH data are untransmitted, but E-DPCCH data are transmitted even in this case. When the total transmit power estimated exceeds the maximum total transmit power (Pmax) even if a channel power scaling on only the single E-DPDCH as mentioned above is performed, the powers of all the channels are set up in such a manner that an additional scaling (Additional scalling) is performed equally on each of them (step 407). Details of the total transmit power control will be mentioned later. Next, it is checked whether or not the transmission time interval (TTI) setting for E-DCH is 10ms. This is because either 10ms or 2ms can be set as the length of the TTI of the E-DCH, and therefore, when the length of the TTI of the E-DCH is 2ms, the TTI of the E-DCH is completed before the TTI of the DCH is completed. When the judgment result shows YES, the sequence is shifted to next step 409. In contrast, because the process about the E-DCH is performed when the judgment result shows NO, the sequence is shifted to step 404 (step 408). Next, it is checked whether all data transmissions have been completed. When the judgment result shows YES, all the processes are ended. In contrast, when the judgment result shows NO, the sequence is shifted to first step 401 (step 409).

A relation between the flow of the transmission process about the DCH, which is shown in Fig. 4, and the internal structure of the mobile station shown in Fig. 2 will be explained below in detail with reference to Fig. 5. Among the steps of Fig. 5, steps 501 to 504 show the operation of the transmission setting evaluating unit 203, and steps 505 to 509 show the operations of the transmission rate control unit 204, the modulating unit 206, and the transmitting unit 206. Although the processes of steps 501 to 504 and the processes of steps 505 to 509 are carried out in parallel, a flow of a sequence of processes associated with a one-time transmission of data (packets) is shown by steps 501, 502, 503, 506, 507, and 508 and is not contradictory to the explanation of Fig. 4. At an early stage of communications, on the basis of a request for the communications from the mobile station 102 or the external network 105, initial settings of various radio resources, such as a setup of channels used for the communications, a setting of the transmission rate, and a timing setting, are determined between the radio resource control units of the fixed station and the mobile station 102. The above-mentioned initialization processing is a known operation which is defined by the conventional standards (release 1999 or release 5). In the mobile station 102, the above-mentioned various pieces of setting information notified are stored in the radio resource control unit 201. The radio resource control unit 201 outputs the setting information (CH_config) to the transmission setting evaluating unit 203 in order to control the operation setting of each unit included in the mobile station 102.

The operation of the transmission setting evaluating unit 203 shown in Fig. 5 will be explained. The transmission setting evaluating unit 203 checks to see whether a setup of a DCH transmission has been made first (step 501). The transmission setting evaluating unit 203 then estimates or calculates a transmit power margin (step 502). Fig. 6 is a flow chart explaining the details of the process of step 502 in which the transmission setting evaluating unit estimates the transmit power margin. The transmission setting evaluating unit 203 inputs the average total transmit power information (UE transmit power info) from the transmit power measurement and control unit 208. The transmission setting evaluating unit also checks the physical channels via which data have been actually transmitted. The transmission setting evaluating unit further checks the total transmit power value (Pmax) which the mobile station can transmit from either the maximum total transmit power setting information included in the various settings (CH_config) or a mobile station capability value (step 502a). The transmission setting evaluating unit 202 further estimates the sum total (Pdchs) of the transmit powers of the DPDCH, the DPCCH, and the HS-DPCCH on the basis of the gain factors which correspond to the channels via which data have been actually transmitted (step 502b). There can be a method of estimating (calculating) the sum total from, for example, the absolute value of the DPCCH power and the various gain factors according to the following equation (1):

[Equation 1]

$$Pdchs = DPCCH\ Power \times (\beta d^2 + \beta c^2 + \beta hs^2) / \beta c^2 \quad \cdots (1)$$

Next, the total transmit power margin (Pmargin) can be calculated from the above-mentioned Pmax value and the above-mentioned sum total (Pdchs) of the transmit powers according to the following equation (2) (step 502c):

[Equation 2]

$$Pmargin = Pmax - Pdchs \quad \cdots (2)$$

According to the configuration of the channels which are multiplexed, the transmission setting evaluating unit can skip step 502b and directly calculate the total transmit power margin (Pmargin) from the total transmitted average power information (UE transmit power), the TFC, the βc information, and power offset information for DPDCH and HS-DPCCH. As another example of the method, there can be provided a method of assuming a total transmit power margin which does not take βhs into consideration, and reflecting the HS-DPCCH transmission in the DCH transmission by using an additional channel transmit power scaling which will be mentioned later. The above-mentioned (2) equation is used in a case in which a true value is displayed.

Next, the transmission setting evaluating unit 203 checks to see whether the setup of a DCH transmission has been completed (or deleted), and, when YES, ends the flow, whereas when NO (when the transmission setting is not deleted), the transmission setting evaluating unit repeats the above process (step 504). Fig. 7 is a flow chart explaining the details of the process of TFC restriction step 503. First, the transmission setting evaluating unit 203 checks to whether the estimated total transmit power exceeds the maximum total transmit power (Pmax) at a past or current transmission timing (= slot) (i.e., whether or not there is any margin in the total transmit power). When YES (i.e., when the estimated total transmit power reaches Pmax), the transmission setting evaluating unit shifts to step 702, whereas when NO, the transmission setting evaluating unit repeats the process at the next transmission timing (step 701) . Next, when the E-DCH is set up, the transmission setting evaluating unit checks to see whether the total transmit power exceeds the maximum total transmit power unless data are transmitted via the E-DPCCH (Pmax). When NO (i.e., when the total transmit power does not exceed Pmax unless data are transmitted via the E-DPCCH), the transmission setting evaluating unit shifts to step 701, whereas when YES, it shifts to next step 703 (step 702). Next, the transmission setting evaluating unit. 203 increases an internal counter thereof (not shown) according to the TFC which has been used, and evaluates the state of each TFC on the basis of the number of slots and the state transition conditions which are defined by the standards (step 703). The transmission setting evaluating unit then outputs the state information about each TFC or a set of available TFCs (a TFC subset) to the transmission rate control unit 204 (step 704). The transmission setting evaluating unit then checks to see whether the DCH transmission has been completed (i.e. , the DCH setting has been completed) . When YES (i.e., when any DCH data are untransmitted), the transmission setting evaluating unit ends the process flow and shifts to step 504, whereas when NO, the transmission setting evaluating unit shifts to step 701 (step 705).

As mentioned above, the mobile station restricts available TFCs in the TFC selection process flow during every predetermined unit time interval. This evaluation is performed for all the TFCs included in the TFCS using the estimated margin of the total transmit power. When no HS-DPCCH data are transmitted within a measurement time interval, an estimation of a transmit power margin for a certain TFC is performed using the TFC, gain factors, and reference transmit power of each channel (each of the DPDCH and the DPCCH). In this case, a transmission time interval is one slot which is decided by the timing of slots for the DCH (DPDCH/DPCCH). The reference transmit power is transmit power of each channel during a specific measurement time interval, the transmit power being used at the time of an estimation of a certain transmit power margin. When HS-DPCCH data are transmitted during part or all of a measurement time interval, an estimation of a transmit power margin for a certain TFC is performed by using the TFC and gain factors of each channel (each of the DPDCH and the DPCCH), a maximum of the gain factor of the HS-DPCCH which is used within the measurement time interval, and the reference transmit power.

The operational processes of the transmission rate control unit 204, the modulating unit 205, and the transmitting unit 206 which are shown in steps 505 to 509 of Fig. 5 will be explained. First, the transmission rate control unit 204 checks to see whether a setup of a DCH transmission has been made. When YES, the transmission rate control unit shifts to step 502, whereas when NO, the transmission rate control unit repeats the processing (step 505). When there exist data which are to be transmitted at the next transmission timing, the transmission rate control unit checks to see whether information (TFC state) about an update of the states of TFCs has reached from the transmission setting evaluating unit 203, and, when there is a change in the states of TFCs, the transmission rate control unit updates information about the states of TFCs (step 506). The transmission rate control unit 204 then selects one TFC which is to be used for the next transmission time interval (TTI) (step 507). As the method of selecting one TFC, there can be provided a known method of selecting one TFC in such a manner that a larger amount of data associated with a channel with a higher priority among the higher-level protocol layer channels (the DTCH and the DCCH) can be transmitted.

Next, a DCH transmission is performed by using the DPDCH and the DPCCH (step 508). The details of step 508 will be mentioned later together with a flow of a E-DCH transmission process. The mobile station then checks to see whether the transmission of DCH data has been completed, and, when YES, ends the processes, whereas when NO, the mobile station returns to step 505 (step 509). Extracting the flow of the transmission process about the E-DCH from Fig. 4, a relation between the transmission process flow and the internal structure of the mobile station shown in Fig. 2 will be explained below in detail with reference to Fig. 8. The whole of the process flow is the same as that shown in Fig. 5. Steps 801 to 804 of Fig. 8 show the operation of the transmission setting evaluating unit 203, and steps 805 to 809 show the operations of the transmission rate control unit 204, the modulating unit 206, and the transmitting unit 206. Although the processes of steps 801 to 804 and the processes of step 805 to 809 are carried out in parallel, processing associated with a one-time transmission of E-DCH data (packets) is shown by steps 801, 802, 803, 806, 807, and 808, and is not contradictory to the explanation of Fig. 4. At an early stage of communications, on the basis of a request for the communications from the mobile station 102 or the external network 105, initial settings of various radio resources, such as a setup of channels used for the communications, a setting of the transmission rate, and a timing setting, are determined between the radio resource control units of the fixed station and the mobile station 102. In the mobile station 102, the above-mentioned various pieces of setting information notified are stored in the radio resource control unit 201. The radio resource control unit 201 outputs the setting information (CH_config) to the transmission setting evaluating unit 203 in order to control the operation setting of each unit included in the mobile station 102.

The operation of the transmission setting evaluating unit 203 in steps 801 to 804 of Fig. 8 will be explained. A detailed explanation of the same operation steps as those in the DCH transmission control flow shown in Fig. 5 will be omitted. The transmission setting evaluating unit 203 checks to see whether a setup of a E-DCH transmission has been made first (step 501). The transmission setting evaluating unit 203 then estimates or calculates a transmit power margin for control of E-DCH transmissions (step 502). Fig. 9 is a flow chart for explaining the process of estimating the transmit power margin. The details of step 802 are shown in Fig. 9. The transmission setting evaluating unit 203 inputs the average total transmit power information (UE transmit power info) from the transmit power measurement and control unit 208 first. The transmission setting evaluating unit also checks channels via which data have been actually transmitted. Channels which comply with old releases, such as the DPDCH, are also included in the channels to be checked. The transmission setting evaluating unit further checks the total transmit power value (Pmax) which the mobile station can transmit from the maximum total transmit power setting information included in the various settings (CH_config) (step 802a). The transmission setting evaluating unit then estimates the sum total (Pdchsec) of the transmit powers of DPDCH, DPCCH, HS-DPCCH, and E-DPCCH on the basis of the gain factors of past or current transmit channels (step 802b). Concretely, the transmission setting evaluating unit estimates the sum total (Pdchsec) of the transmit powers from, for example, the absolute value of the DPCCH power and various gain factors by using the following equation (3):

[Equation 3]

$$\mathrm{Pchsec} = \mathrm{DPCCH\ Power} \times (\beta d^2 + \beta c^2 + \beta hs^2 + \beta ec^2) / \beta c^2 \quad \cdots (3)$$

Next, the transmission setting evaluating unit calculates a total transmit power margin (Pmargin2) which does not include E-DCH capable channel power from the above-mentioned Pmax value and the above-mentioned sum total (Pdchsec) of the transmit powers by using the following equation (4) (step 802c) :

[Equation 4]

$$\mathrm{Pmargin2} = \mathrm{Pmax} - \mathrm{Pdchsec} \quad \cdots (4)$$

According to the real structure of the transmit channels which are multiplexed, instead of the equation (4), the transmission setting evaluating unit can acquire the total transmit power margin from (1) the average total transmit power information (UE transmit power), (2) the E-TFC, (3) the βed information, and (4) power offset information on other channels which is based on the DPCCH, and so on. The transmission setting evaluating unit can alternatively skip step 402b and then calculate the total transmit power margin (Pmargin) directly. The above-mentioned (4) equation is used in a case of subtracting a true value.

Next, in step 803 of Fig. 8, the transmission setting evaluating unit evaluates the state of the E-TFC used for transmission and restricts available E-TFCs (E-TFC Restriction). The transmission setting evaluating unit 203 notifies the state information about the state of each E-TFC to the transmission rate control unit 204 (step 803). For example, as the state information about the state of each E-TFC, the transmission setting evaluating unit can notify that the "state" of a certain E-TFC is either "unavailable (blocked)" or "available (supported) " or can notify available (supported) E-TFCs.

Fig. 10 is a flow chart explaining a process of evaluating the state of a E-TFC and restricting available E-TFCs. The details of step 803 of Fig. 8 are shown in Fig. 10. First, the transmission setting evaluating unit 203 calculates the gain factor (βed) corresponding to the E-TFC used at a past or current transmission timing (= slot) which is defined by the standards. From the gain factor (βed) and the power offset information in the HARQ profile, the transmission setting evaluating unit acquires the effective channel amplitude coefficient (the gain factor βed,eff) of the E-DPDCH, and estimates E-DPDCH channel power which corresponds to the used E-TFC and which is originally needed for transmission (step 803a). Next, the transmission setting evaluating unit checks to see whether the estimated E-DPDCH channel power exceeds the total transmit power margin (Pmargin) at the above-mentioned transmission timing (i.e., whether or not there is a margin in the transmit power?) (step 803b). When YES in step 803b (i.e., when the estimated E-DPDCH channel power exceeds the total transmit power margin (Pmargin)), the transmission setting evaluating unit shifts to step 803c and increments an inner counter (not shown) which corresponds to the E-TFC. When NO in step 803b, the transmission setting evaluating unit shifts to step 803g (step 803b). After processing step 803c, the transmission setting evaluating unit then evaluates the state of each E-TFC on the basis of the number of slots (or the number of counters) and the state transition conditions which are defined by the standards (steps 803c and 803d). Next, the transmission setting evaluating unit outputs the state information about the state of each E-TFC or a set of available E-TFCs (a E-TFC subset) to the transmission rate control unit 204 (step 803e). The transmission setting evaluating unit then checks to see whether the E-DCH transmission has been completed (i.e., whether the E-DCH setting has been completed). When YES (i.e., when any E-DCH data are untransmitted), the transmission setting evaluating unit ends the process flow, whereas when NO, the transmission setting evaluating unit shifts to step 803a (step 803f).

When No in step 803b, the transmission setting evaluating unit, in step 803g, checks whether the total transmit power of the mobile station reaches the maximum total transmit power (Pmax) in the E-TFC which is used at the past or current transmission timing (= slot). When YES in step 803g, the transmission setting evaluating unit shifts to step 803h, whereas when NO, the transmission setting evaluating unit shifts to step 803d (step 803g). The transmission setting evaluating unit, in step 803h, checks to see whether a channel power scaling on only E-DPDCH channel has been performed at the time of a E-DPCCH transmission, and whether or the E-DPDCH channel is in a state of untransmission (DTX: Discontinuous Transmission). When YES (i.e., in a case of DTX), the transmission setting evaluating unit increments a corresponding counter in step 803c. When NO, the transmission setting evaluating unit shifts to step 803d in which the transmission setting does not increment the counter and does not reflect it in the E-TFC restriction process.

When carrying out the E-TFC restriction process of step 803 which is explained with reference to Fig. 10, as mentioned above, the transmission setting evaluating unit then checks to see whether step 804 has been carried out and the transmission of E-DCH data has been completed. When the transmission has not been completed (i.e., when NO in step 804), the transmission setting evaluating unit returns to step 801. When the transmission is completed (when YES in step 804), the transmission setting evaluating unit ends the flow.

As mentioned above, the mobile station performs the E-TFC selection process during every predetermined transmission time interval (TTI) so as to evaluate which E-TFC is available and to select one E-TFC.

This evaluation is performed for each of all the E-TFCs included in the E-TFCS by using the estimated transmit power margin (i.e. , the estimated total transmit power of each channel other than the E-DPDCH and the maximum total transmit power (Pmax)). When no HS-DPCCH data are transmitted within a measurement time interval, an estimation of a transmit power margin for a certain E-TFC is performed using the TFC/E-TFC, gain factor, and reference transmit power of each channel (each of the DPDCH, the DPCCH, the E-DPDCH, and the E-DPCCH). In this case, a transmission time interval is, for example, one slot which is decided by the timing of slots for the DCH (DPDCH/DPCCH) or 1 TTI of E-DCH transmission. The reference transmit power is transmit power of each channel during a specific measurement time interval, the transmit power being used at the time of an estimation of a certain transmit power margin. In contrast, when HS-DPCCH data are transmitted during a part or all of a measurement time interval, an estimation of a transmit power margin for a certain E-TFC is performed by using the TFC (E-TFC) and gain factor of each channel (each of the DPDCH, the DPCCH, the E-DPDCH, and the E-DPCCH), a maximum of the gain factor of the HS-DPCCH which is used during the measurement time interval, and the reference transmit power.

For channels other than the DPCCH, a power offset which is based on the DPCCH channel power can be used instead of the gain factors.

In the above-mentioned embodiment, whether only the E-DPDCH has been in the untransmission state (DTX) is taken into consideration in the E-TFC restriction, though a channel power reduction on only E-DPDCH (i.e., a reduction in the gain factors) can be taken into consideration. An example in this case will be explained in Embodiment 3 which will be mentioned later. In this embodiment, the transmission setting evaluating unit estimates the E-DPDCH channel power which is originally needed only for the E-TFC which is used at the past or current transmission timing (= slot) (step 803a). The transmission setting evaluating unit can alternatively estimate E-DPDCH channel power which is originally needed for each of all the E-TFCs so as to determine the state of each E-TFC.

The operational processes of the transmission rate control unit 204, the modulating unit 205, and the transmitting unit 206 shown in Fig. 8 will be explained. First, the transmission rate control unit 204 checks to see whether a setup of a E-DCH transmission has been made, as in the case of Fig. 8(a) (step 805). Next, the transmission rate control unit checks to see whether update information about an update of the E-TFC state has reached from the transmission setting evaluating unit 204, and, when update information has reached, updates the state (step 806). Next, as known, on the basis of the scheduling result information which is extracted from received E-AGCH and E-RGCH data, the transmission rate control unit updates the value of a variable (Serving_Grant) used for the internal settings of the mobile station, and selects one E-TFC which is used during the next transmission time interval (TTI) on the basis of this internal variable and the E-TFC state information (step 807). As a method of selecting one E-TFC, one of the following methods: (1) a method of selecting one E-TFC in such a manner that the E-DPDCH channel power (or the ratio of channel powers) falls within a permissible range by strictly applying the internal variable and the E-TFC state information; (2) a method of, while strictly applying the internal variable, selecting one E-TFC by acquiring, for example, an average of E-TFC states during some past TTIs and further making a margin correction to the average; (3) a method of selecting one E-TFC in consideration of an accumulation of transmit power control commands (TPCs) in addition to the internal variable and the E-TFC state information; and (4) a method of temporarily permitting a selection of one E-TFC which exceeds the internal variable can be provided. The method is executed according to the implementation of the mobile station or the definitions of the standards.

Fig. 11 is a flow chart explaining the E-TFC selection process (E-TFC selection). The details of step 807 of Fig. 8 are shown in Fig. 11. In Fig. 11, the transmission rate control unit checks to see whether the transmission of data is the first-time one or a retransmission. When the transmission is the first-time one (i.e., when YES in step 807a), the mobile station shifts to step 807b. In contrast, when the transmission is a retransmission (i.e., when NO in step 807a), the transmission rate control unit shifts to step 807d (step 807a). When the transmission is the first-time one, the transmission rate control unit selects available E-TFCs which fall within the limits of the total transmit power margin (step 807b). As a method of selecting an E-TFC in step 807b, there can be methods including: (1) a method in such a manner that the data of MAC-d flow with a higher priority in QoS setting which is multiplexed onto the E-DCH can be transmitted with a higher speed; and (2) a method in such a manner a channel (or data) with a higher priority which is used for a higher-level protocol can be transmitted with a higher speed. Which one of the methods is used is defined by either the technical specification or the specifications of the implementation of the communications system. Next, the transmission rate control unit calculates the effective gain factor βed,eff of the E-DPDCH from the E-TFC selected in step 807b, and, after that, outputs it, as well as the E-TFC information, to both the transmission setting evaluating unit 203 and the modulating unit 205. At this time, when data associated with other channels are transmitted, the gain factors of the other channels are also outputted (step 807c). In contrast, when, in step 807a, the transmission is a retransmission (i.e., when NO in step 807a), the transmission rate control unit shifts to step 807c without performing the E-TFC selection process (step 807d). Next, the transmission rate control unit shifts to step 808 of Fig. 8.

Next, a transmission of E-DCH data is performed by using the E-DPDCH and the E-DPCCH. The modulating unit 204 determines a relative power ratio among the channels on the basis of the gain factor of each of the transmit channels (the E-DPDCH and the E-DPCCH), and multiplexes and modulates the data associated with the channels using a known technique. After that, frequency conversion and power amplification are performed on the modulated signal and this signal is transmitted from the antenna 207. The details of the transmission process will be mentioned later together with the DCH transmission process (step 808). Next, the mobile station, in step 809 of Fig. 8, checks to see whether the E-DCH transmission has been completed, and, when YES (i.e., when the E-DCH transmission has been completed), ends the transmission process flow. When NO, the mobile station shifts to step 805 and then repeats the above-mentioned steps.

Fig. 12 is a flow chart explaining a transmit power control process carried out by the mobile station. The details of step 407 of Fig. 4 are shown in Fig. 12. First, the transmit power measurement and control unit 208 estimates the total transmit power (Estimated UE transmit power) required for transmission at the next transmission timing (during the next slot or TTI) on the basis of the gain factors of channels via which data are to be transmitted actually and a closed loop transmit power control command (TPC). The transmit, power measurement and control unit 208 then checks to see whether the estimated total transmit power (Estimated UE transmit power) exceeds the maximum transmit power setting Pmax (step 407a). When the estimated total transmit power does not exceed Pmax (i.e. , when NO), the transmit power measurement and control unit 208 outputs transmit power control information (Po_cont) to the transmitting unit 206, and the transmitting unit carries out the transmissionprocess of step 407i. When the estimated total transmit power exceeds Pmax (i.e., when YES), the transmit power measurement and control unit shifts to step 407b. Next, the transmit power measurement and control unit 208, in the process steps of 407b, 407c1, 407c2, 407d1, 407d2, 407e1, 407e2, 407f1, and 407f2, reduces the value of only the gain factor βed,eff of the E-DPDCH so as to reduce the total transmit power. For example, in this case, when the DPDCH is set up (i.e., when YES in step 407b), the transmit power measurement and control unit can lower the value of βed,eff to zero (i.e., can perform a DTX operation), whereas when the DPDCH is not set up (i.e., when NO in step 407b), the transmit power measurement and control unit can lower the value of βed,eff to a guaranteed minimum (βed,eff,min) which is notified to the mobile station. Because the gain factor βed, eff has to have a quantized discrete specified value, when the gain factor which is lowered in step 407c1 or 407c2 has a value intermediate between two adjacent discrete specified values, the gain factor is set to have a smaller one of the discrete values. The transmit power measurement and control unit makes the estimated total transmit power get close to the maximum transmit power setting Pmax through the above-mentioned processes.

The transmit power measurement and control unit 208 outputs a gain factor control signal (β_cont) to the modulating unit 205 so as to modify the final gain factor setting for E-DPDCH. The transmit power measurement and control unit 208 also outputs transmit power control information (Po_cont) to the transmitting unit 205. Next, the transmit power measurement and control unit 208, in step 407g, checks to see whether the estimated total transmit power exceeds the maximum transmit power setting Pmax again. When the estimated total transmit power does not exceed the maximum transmit power setting (i.e., when NO in step 407g), while shifting to step 407i, the transmit power measurement and control unit outputs control information (Po_cont) to the transmitting unit 205. In contrast, when the estimated total transmit power exceeds Pmax (when YES in step 407g), the transmit power measurement and control unit shifts to step 407h and, while maintaining the relative ratio among the transmit powers of the channels, performs additional channel transmit power scaling control (Additional scaling or Equal scaling) in such a manner that the total transmit power does not exceed Pmax. Then, while outputting the transmit power control information (Po_cont) in which this additional power scaling control is reflected to the transmitting unit 206, the transmit power measurement and control unit shifts to step 407i (step 407g).

Next, the transmitting unit 206 amplifies the modulated signal (Mod_signal) on the basis of the inputted control information (Po_cont), and outputs the amplified modulated signal as a radio signal (RF_signal). The outputted radio signal (RF_signal) is transmitted by radio from the antenna 207 to the base station 103 (step 407i). When the final gain factor of the E-DPDCH becomes zero, E-DPCCH data are transmitted while any E-DPDCH data are untransmitted. After that, the mobile station shifts to step 408 of Fig. 4. The concept of processing in steps 407b to 507h is defined by the technical specification. Next, the mobile station, in step 408 of Fig. 4, checks to see whether or not the length of the transmission time interval (TTI) of the E-DCH is 10ms. This is because there can be a case in which the length of the TTI of the E-DCH is 2ms while the length of the TTI of the DCH is 10ms. Because the TTI of the E-DCH is completed during a DCH transmission in a case in which the length of the TTI of the E-DCH is 2ms, the mobile station shifts to step 404 and repeats the control.

Next, the mobile station checks to see whether each transmission via the DCH and each transmission via the E-DCH have been completed (or whether their settings have been released). When each transmission via the DCH and each transmission via the E-DCH have not been completed, i.e., when NO, the mobile station returns to step 405. When each transmission via the DCH and each transmission via the E-DCH have been completed, i.e., when YES, the mobile station ends the flow (step 409 of Fig. 4). The process flow of an E-TFC evaluation is processed independently of a TFC evaluation for the DCH. As a result, while the backward compatibility (Backward compatibility) is ensured, the transmission control of the mobile station becomes simple. Furthermore, the transmission rate control unit 203 processes a E-TFC selection independently of a TFC selection for the DCH. As a result, the transmission control of the mobile station becomes simple while the backward compatibility (Backward compatibility) is ensured, as in the case of the transmission setting evaluating unit 202. A concrete operation of a TFC evaluation for the DCH is carried out on the basis of the specifications of the maximum transmit power setting, as defined by a conventional technology.

Figs. 13, 14, and 15 are explanatory drawings schematically showing the transmit power and the transmit power margin of each channel for explaining the specifications of the maximum total transmit power (Pmax) of the mobile station. Hereafter, the Pmax setting and the reference which are used for an estimation (or a calculation) of the transmit power margin will be explained. In Figs. 13, 14, and 15, Pmax (Capability or NW) shows either the maximum transmit power which the mobile station can output with its capability (UE capability) or the maximum transmit power setting notified from the radio resource control unit 301 of the fixed station. The mobile station cannot transmit any data with the total transmit power which exceeds this value during its operation. Pmax (βd, βc) shows a Pmax specified value in a case in which data are transmitted via the HS-DPCCH which is a channel for HSDPA and the E-DCH is not set up (or any E-DCH data are untransmitted), and is set to a value lower than the above-mentioned Pmax (Capability) according to the technical specification TS25.101. Pmax (βd, βc, βhs, βed(,eff), βec) shows a Pmax specified value in a case in which the E-DCH is set up (or when E-DCH data are transmitted). In accordance with this embodiment, assume that Pmax (Capability or NW) >= Pmax (βd, βc) >= Pmax (βd, βc, βhs, βed(,eff), βec). As in the case of Pmax (βd, βc) at the time of an HS-DPCCH transmission, there can be a case in which Pmax has a specified value which does not depend upon the gain factor of the corresponding channel, and whether Pmax includes all the gain factors is determined dependently upon a PAR (Peak to Average Ratio) of the radio signal (RF_signal), and so on. As an alternative, different specifications can be provided for the time of a transmission of channel data for E-DCH and for the time of a non-transmission of channel data for E-DCH, respectively. These various Pmax value settings are defined by the technical specifications, or are notified from the fixed station. In the technical specification of release 5 which is a conventional technology, Pmax (Capability) of Pmax (Capability or NW) and Pmax (βd, βc) are defined. Pmax can be defined so as to include, as parameters, the amount of power offset of each channel from the DPCCH power, such as the power offset of the E-DDPCH channel which is determined from the HARQ profile. When Pmax includes the power offset explicitly, for example, Pmax (βd, βc, βhs, βed, ΔE-DPDCH, βec), Pmax (βc, ΔDPDCH, ΔHS-DPCCH, ΔE-DPCCH, ΔE-DPDCH), or the like is provided. When Pmax includes the power offset implicitly, Pmax (βd, βc, βhs, βed,eff, βec) or the like is provided.

Each of Figs. 13, 14 and 15 can also be considered to show a relation between a combination of channels at the time of a transmission and a Pmax specified value. In the figures, the vertical axis shows the transmit power and the horizontal axis shows the radio-wave-propagation distance from the fixed station. The transmit power of each channel shows a relative relation, but does not show any absolute magnitude. "Additional channel transmit power scaling 1" (Additional scaling 1) in the figure shows a region where an additional channel transmit power scaling (Additional scaling) process is applied in a state in which only DPDCH/DPCCH data are transmitted or in a state in which the HSDPA is set up, but any HS-DPCCH data are not transmitted. At this time, DPDCH data are transmitted at a minimum transmission rate (TFC, min), and the total transmit power is limited to Pmax (Capability or NW) with the power ratio between the transmit power of the DPDCH and that of another channel (DPCCH) being maintained.

"Additional channel transmit power scaling 2" (Additional scaling 2) in the figure shows a region where an additional channel transmit power scaling (Additional scaling) process is applied in a state in which DPDCH/DPCCH/HS-DPCCH data are transmitted or in a state in which the E-DCH is set up, but any E-DPDCH/E-DPCCH data are not transmitted. Because HS-DPCCH data are transmitted, the total transmit power is limited by Pmax (βd, βc). "Additional channel transmit power scaling 3" (Additional scaling 3) shows a region where an additional channel transmit power scaling (Additional scaling) is applied in a state in which DPDCH/DPCCH/HS-DPCCH/E-DPCCH data are transmitted. At this time, although E-DPDCH data can be transmitted at a transmission rate determined by the transmission rate control unit, any E-DPDCH data are untransmitted (DTX) because the gain factor can be reduced to zero. Because a channel for E-DCH is set up, the total transmit power is limited by Pmax (βd, βc, βhs, βed (,eff), βec).

A case of Fig. 13 will be explained below. Fig. 13 corresponds to a case in which a DCH transmission, a E-DCH transmission, and an HS-DPCCH transmission are set up. In a status in which the mobile station moves away from the fixed station while transmitting data via all the uplink channels, because the transmit power of the mobile station is controlled by performing known closed loop transmit power control (so-called TPC control) which is defined by the technical specification so as to ensure the reception power in the receive antenna of the fixed station (to be more precise, Eb/NO of reception required in order to ensure a required error rate), the transmit power of each of all the channels is increased with distance from the fixed station. In a region A shown in Fig. 13, although data are transmitted via all the channels, the total transmit power reaches neither of the Pmax values. In a region B, the total transmit power reaches the Pmax specified value (Pmax (βd, βc, βhs, βed(,eff), βec)) at the time of a setup of a E-DCH transmission. Because a higher priority is given to a transmission via the E-DCH than to a transmission via the DCH and channel data for E-DCH are transmitted within the limits of the transmit power margin, only the transmit power of the channel for E-DCH is decreased with distance from the fixed station. The decrease in the transmit power of the channel for E-DCH means that the transmission rate (E-TFC) of a E-DCH selected at the time of a E-TFC selection decreases. Because the gain factor of the E-DPDCH channel can be reduced to zero, the additional channel power scaling 3 (Additional scaling 3) is applied.

Because at the time of the E-TFC selection process a E-TFC is selected in such a manner that the E-DPDCH transmit power falls within the limits of the transmit power margin, ideally, no additional channel power scaling operation occurs. However, depending on the method of estimating the transmit power margin, there is a possibility that the state at the time of a E-TFC selection differs from the actual state at the time of a start of a transmission due to an influence of a measurement delay and so on. In this case, an additional channel power scaling operation may be performed. In contrast, because transmit power control (what is called TPC control) on a slot-by-slot basis is performed in each of TTI time intervals, the required total transmit power may exceed the maximum transmit power specified value of the mobile station, and therefore an additional channel transmit power scaling occurs theoretically. However, as explained in step 407g of Fig. 12, before performing an additional channel power scaling, the mobile station performs a scaling operation on only the channel transmit power of the E-DPDCH per slot. A determination of whether to carry out an additional channel power scaling operation or whether or not the data are the one on which an additional channel scaling is to be performed can be made by the fixed station, and can be notified to the mobile station through an RRC signaling or the like, so that the operation of the mobile station is controlled.

In a region C, data on channels other than the channel for E-DCH are transmitted. In this region, because the total transmit power reaches the Pmax specified value (Pmax (βd, βc, βhs, βed (,eff), βec)) with the transmit powers of the channels other than the channel for E-DCH, the total transmit power can't afford to transmit any channel data for E-DCH. Because HS-DPCCH data are transmitted, Pmax is limited by Pmax (βd, βc) lower than Pmax (Capability or NW). Because a minimum rate (TFC, min) is set up for the DCH, when the total transmit power reaches Pmax (βd, βc), the additional channel power scaling operation 2 (Additional scaling 2) is applied. A region D is the one where data on the channels other than those for the E-DCH are transmitted and any HS-DPCCH data are not transmitted. In this region, because no HS-DPCCH data are transmitted, Pmax (Capability or NW) is applied as the Pmax specified value. Because the minimum rate (TFC, min) is set up for the DCH, when the total transmit power reaches Pmax (Capability or NW), the additional channel power scaling operation 1 (Additional scaling 1 in the figure) is applied.

As the transmit power margin value for a transmission of E-DCH data (i.e., E-DPCDCH data), a value is estimated (calculated) by subtracting the sum total of the powers of the channels (DPDCH/DPCCH/HS-DPCCH/E-DPCCH) excluding the E-DPDCH channel power from either of the above-mentioned Pmax specified values. As a method of defining a specified value (a setting) of Pmax (i.e., Pmax (βd, βc, βhs, βed(,eff), βec)) in a case in which the E-DCH is set up, there can be providing various methods including: (1) a method of taking the transmit power control (TPC) in steps of 1dB into consideration, as in the case of the conventional standards, and then defining the specified value with 1dB of accuracy in a similar manner; (2) a method of taking the characteristics of radio signal waveforms, such as PAR (Peak to Average Ratio) characteristics depending on the channel configuration, into consideration, and then defining the specified value with a degree of accuracy finer than 1dB; and (3) a method of defining the specified value using either a conventional degree of accuracy or a fine degree of accuracy properly according to whether or not the E-DCH is set up. Which method is used is defined by the standards or is specified at the time when a communication setting (configuration) is made.

It is already defined that the channel amplitude (the gain factor βed (,eff)) of the E-DPDCH can have a larger value than that (the gain factor βd) of the DPDCH. In this case, the characteristics of the E-DPDCH signal waveforms may become dominant, and the PAR (Peak to Average Ratio) may become small compared with that in the case of a configuration having only conventional channels. Therefore, according to the actual specifications, Pmax (βd, βc, βhs, βd(,eff), βec) may become larger than the other Pmax specified values. Although Fig. 13 shows that Pmax (βd, βc, βhs, βed (,eff), βec) used as the reference for an estimation of the transmit power margin for the E-DCH has a fixed value, a plurality of regions or a plurality of conditions can be alternatively provided and different values can be set to the plurality of regions or the plurality of conditions, respectively.

A case of Fig. 14 will be explained below. Symbols and technical terms in the figure are the same as the corresponding ones of above-mentioned Fig. 13, respectively. Fig. 14 corresponds to a case in which a E-DCH transmission and an HS-DPCCH transmission are set up, whereas any DCH transmission is not set up. Fig. 14 differs from Fig. 13 in that because the DPDCH is not set up (any DPDCH data are untransmitted), a guaranteed minimum (βed,eff, min) is set to the gain factor of the E-DPDCH and the E-DPDCH is also scaled while the relative power ratio with the other channels is maintained in the additional channel scaling 3 in the region B.

A case of Fig. 15 will be explained below. Symbols and technical terms in the figure are the same as the corresponding ones of above-mentioned Figs. 13 and 14, respectively. Fig. 15 corresponds to a case in which a DCH transmission and an HS-DPCCH transmission are set up, whereas any E-DCH transmission is not set up (any E-DCH data are untransmitted) . This setting is the same as that in the case of the conventional technology. Fig. 15 differs from Figs. 13 and 14 in that because the E-DCH is not set up (any E-DCH data are untransmitted), the additional channel scaling 3 (Additional scalling3 in the figure) in the region B does not occur. The Pmax specified value for an estimation of the transmit power margin for the DCH is selected from Pmax (Capability or NW) and Pmax (βd, βc) according to whether an HS-DPCCH transmission has been performed.

The Pmax (βd, βc, βhs, βed(,eff), βec) specified value in accordance with Embodiment 1 will be explained with reference to Fig. 16. In Fig. 16, instead of directly defining Pmax using the gain factors, Pmax (βd, βc, βhs, βed(,eff), βec) is defined equivalently by defining a maximum amount of reduction (MPR: Maximum Power Reduction) from the specification of the mobile station's capability (Pmax (Capability)) according to ON/OFF of transmission via each of channels including the DPCCH, the HS-DPCCH, the DPDCH, the E-DPCCH, and the E-DPDCH, the minimum diffusion coefficient (SF min) of the E-DPDCH which is set up, and the number (Ncodes) of parallel transmit channels of the E-DPDCH. Thus, because the specification parameters include ON/OFF of transmission via each channel other than the gain factor of each channel, there is provided an advantage of eliminating a necessity to take into consideration a huge number of combinations depending upon combinations of gain factors each having two or more specified values, thereby facilitating the transmission control of the mobile station and simplifying the structure of the mobile station, such as reducing the size of the storage area. Furthermore, because whether to perform a transmission is determined before the gain factors are calculated, there is provided another advantage of being able to start the transmit power control at an earlier time, and to enable the transmission control circuit to have a lower processing capability.

As mentioned above, in accordance with this embodiment, because the details of the transmission control including a selection of the transmission rate in a case in which a E-DCH channel is added, the method of reducing the influence upon the conventional channels, and so on are defined, there is provided an advantage of being able to make the transmission control operation of the mobile station become unique, and providing an improvement in the efficiency of the operation of the communications system.

In this embodiment, although the margin of the total transmit power is expressed in dimension of power (or a power ratio), in a case in which the notification method of notifying the scheduling results from the fixed station is one of the following methods: (1) a method of notifying a gain factor (expressed in dB or true value); (2) a method of notifying a ratio of gain factors (such as βed/βc, or βed,eff/βc, or expressed in dB or true value); and (3) a method of notifying a power ratio (expressed in dB or true value), the transmit power margin can also be defined in such a manner as to be expressed in the same dimension as the notified results. As a result, the present embodiment offers an advantage of eliminating the necessity to unite the dimensions at the time of an evaluation of the E-TFC state, thereby simplifying the control of the mobile station.

As the timing or time interval at or during which the transmission setting evaluating unit 203 defines the transmit power margin, there are (1) a margin of the last slot of a TTI which is located immediately before TTIs in which data are actually transmitted; (2) an average of margins of all the slots of a TTI which is located immediately before TTIs in which data are actually transmitted; (3) an average of margins of several slots of a TTI which are located immediately before TTIs in which data are actually transmitted; (4) an estimated value in the first slot of TTIs in which data are actually transmitted, the value being estimated in consideration of the closed-loop transmit power control; and (5) an estimated value in several slot of TTIs in which data are actually transmitted, the value being estimated in consideration of the closed-loop transmit power control. In the case of (1), because the status of the transmit power margin at a time immediately before the transmission can be taken into consideration, uplink radio resources can be used more efficiently. In the case of (2), an average operation excluding variations in TTIs can be carried out, an improper E-TFC can be selected because of instantaneous variations in units of a slot in the E-TFC selection for every TTI. In the case of (3), the E-TFC state can be changed with a variation during a longer time period, for example, a change in the propagation loss caused by a change in the distance from the base station, or the like. In the case of (4) or (5), by taking into consideration the closed-loop transmit power control, the E-TFC evaluation and the E-TFC selection in consideration of the tendency of future variations are carried out, so that the uplink radio resources can be used more efficiently. The transmission timing of the above-mentioned slots is synchronized with the slot timing of the uplink DCHs (the DPDCH and the DPCCH). Similarly, an update of the E-TFC is also carried out at the timing of a TTI which is synchronized with the slot timing of the DCHs (the DPDCH and the DPCCH). As the averaging method, there are (1) an arithmetic average, (2) a weighted average, (3) a geometric average, etc., and one of these averaging methods is selected dependently upon how the mobile station is implemented, or is defined by the standards.

Embodiment 2.

The Pmax (βd, βc, βhs, βed(,eff), βec) specified value in accordance with Embodiment 2 of the present invention will be explained with reference to Fig. 17. In Fig. 17, according to ON/OFF of transmission of each of channels including the DPCCH, the HS-DPCCH, the DPDCH, the E-DPCCH, and the E-DPDCH, and a minimum diffusion coefficient (SF min) and a maximum number (Ncodes) of parallel E-DPDCH transmissions which are category specifications (Category) of the E-DCH as the mobile station's capability, Pmax (βd, βc, βhs, βed(,eff), βec) is equivalently defined by defining a maximum amount of reduction (MPR: Maximum Power Reduction) from the specification of the mobile station's capability (Pmax (Capability)). More specifically, Pmax (βd, βc, βhs, βed, (eff), βec) includes, as a parameter, the mobile station's capability other than the channel transmission conditions that change every TTI. By thus using and defining the category specification (Category) of the E-DCH as a parameter, there is provided an advantage of eliminating a necessity to take into consideration a huge number of combinations depending upon combinations of gain factors each having two or more specified values, thereby facilitating the transmission control of the mobile station and simplifying the structure of the mobile station, such as reducing the size of the storage area. Furthermore, because the specification parameters include ON/OFF of a transmission via each channel other than the gain factor of each channel, as in the case of Fig. 16 of Embodiment 1, there is provided an advantage of eliminating a necessity to take into consideration a huge number of combinations depending upon combinations of gain factors each having two or more specified values, thereby facilitating the transmission control of the mobile station and simplifying the structure of the mobile station, such as reducing the size of the storage area. In addition, because whether to perform a transmission is determined before the gain factors are calculated, there is provided another advantage of being able to start the transmit power control at an earlier time, and to enable the transmission control circuit to have a lower processing capability. The gain factors can be combined, as a parameter, instead of ON/OFF of a transmission via each channel. As mentioned above, in accordance with this embodiment, because the details of the transmission control in a case in which a E-DCH channel is added are defined, there is provided an advantage of being able to make the transmission control operation of the mobile station become unique, and providing an improvement in the efficiency of the operation of the communications system. This embodiment explained above can be combined with Embodiment 1.

Embodiment 3.

Fig. 18 is a flow chart explaining a E-TFC restriction process of evaluating the states of E-TFCs and restricting available E-TFCs. Fig. 18 is shown for explaining in detail step 803 (the E-TFC restriction process) of Fig. 8 explained in Embodiment 1, and includes some steps which are the same as those of the flow chart shown in Fig. 10. Therefore, in Fig. 18, because the same steps as those shown in Fig. 10 mean the same processes or like processes, the explanation of the steps will be omitted hereafter. In this embodiment, in the transmit power control step (e.g. , step 407 of Fig. 4 shown in Embodiment 1), when only the channel amplitude (βed) of the E-DPDCH is scaled (scaling), it is reflected in the E-TFC restriction (step 803h1).

As mentioned above, in accordance with this embodiment, because the details of the transmission control in a case in which a channel for E-DCH is added are defined, there is provided an advantage of being able to make the transmission control operation of the mobile station become unique, and providing an improvement in the efficiency of the operation of the communications system. Furthermore, because a state in which the transmit power margin for the E-DPDCH is insufficient can be reflected in the E-TFC restriction, it can be reflected in the selection of a E-TFC. As a result, because the opportunity to select a E-TFC with which the transmit power runs short is reduced, there is provided an advantage of being able to perform more appropriate and more efficient transmission control.

In this embodiment, although a criterion by which to judge whether to perform a scaling operation (scaling) on only the channel amplitude (βed) of the E-DPDCH is disposed (step 803h1), one of the following various condition settings: (1) a judgment of whether it exceeds a specific E-DPDCH channel amplitude value (or whether an interruption has been made?) ; (2) a judgment of whether it falls within a specific range of E-DPDCH channel amplitude values; and (3) a judgment of whether there is no necessity to perform a scaling operation (scaling) on only the channel amplitude (βed) of the E-DPDCH unless E-DPCCH data are transmitted can be provided. In each of the above-mentioned cases (1) and (2), a specific value can be specified, as a notification (RRC_signaling) of the setting information, by the fixed station (the radio resource control 301). As a result, there is provided an advantage of being able to provide flexible radio resource control and flexible transmission control which take the whole of the communications system into consideration. This embodiment can be combined with any one of above-mentioned Embodiments 1 and 2. Furthermore, by weighting counts according to the degree of the scaling of the E-DPDCH channel transmit power, it can be reflected in the E-TFC restriction.

Embodiment 4.

Fig. 19 is a flow chart explaining a E-TFC restriction process of evaluating the states of E-TFCs, and evaluating and restricting available E-TFCs. Fig. 19 is shown for explaining in detail step 803 (the E-TFC restriction process) of Fig. 8 explained in Embodiment 1, and includes some steps which are the same as those of the flow chart shown in Fig. 10. Therefore, in Fig. 19, because the same steps as those shown in Fig. 10 mean the same processes or like processes, the explanation of the steps will be omitted hereafter. In this embodiment, in a transmit power control step (e.g., step 407 of Fig. 4 shown in Embodiment 1), an average of the number of times that E-DPDCH packet data had been retransmitted and the number of times that E-DPDCH packet data have been retransmitted is counted, when the averaged retransmission count exceeds a predetermined number of times (Nretrans), it is reflected in the E-TFC restriction process. That is, the retransmission count is used as a parameter of the E-TFC restriction process. This embodiment differs from Embodiment 1 shown in Fig. 10 in that there is provided a criterion by which to judge whether the averaged retransmission count exceeds the predetermined number of times (Nretrans), as shown in step 803h2. The retransmission count increases in a case (1) in which the total transmit power margin of the mobile station at the time of the first transmission or at the time of a retransmission is smaller than the E-DPDCH channel power which is acquired from the used E-TFC and which is originally required at the time of a transmission, or in a case (2) in which because the value of the scheduling results from the fixed station is small, and therefore the E-DPDCH channel power which becomes available at the time of a retransmission is smaller than the E-DPDCH channel power which is acquired from the used E-TFC and which is originally required at the time of a transmission, the transmit power becomes insufficient. Therefore, in either of the above-mentioned cases (1) and (2) in which the retransmission count easily increases, the available channel transmit power for the E-TFC is insufficient. Therefore, in accordance with this embodiment, because the opportunity to select a E-TFC with which the transmit power becomes insufficient can be reduced by taking the retransmission count into consideration as a parameter, there is provided an advantage of being able provide more appropriate and more efficient transmission control.

As mentioned above, in accordance with this embodiment, because the details of the transmission control in a case in which a E-DCH channel is added are defined, there is provided an advantage of being able to make the transmission control operation of the mobile station become unique, and providing an improvement in the efficiency of the operation of the communications system. In this embodiment, when the total transmit power exceeds Pmax in step 803g, a judgment of whether the average number of retransmissions exceeds the predetermined number of times (Nretrans) is made. Furthermore, there can be defined one of the following various process flows: (1) a process of, also when YES in step 803b, additionally performing the same judgment, and then reflecting the result of the judgment in the E-TFC restriction; (2) a process of determining the state of a E-TFC from both a count obtained from the transmit power margin (margin) and a count showing the number of retransmissions, by, for example, using either a method (a) of using a larger one of both the counts or a method (b) of acquiring the state (supported or Blocked state) of the E-TFC for each of the counts and implementing a logical AND operation on the states acquired for both of the counts; and (3) a process of providing two or more predetermined reference numbers of times, and then performing a weighting process using these predetermined reference numbers of times so as to determine the state of a E-TFC. Furthermore, the above-mentioned average number of retransmissions (Nretrans) can be fixed by the standards, or can be specified by a notification (RRC_signalling) of setting information from the fixed station (the radio resource control 301). When the above-mentioned average number of retransmissions is notified from the fixed station to the mobile station, there is provided an advantage of being able to provide flexible radio resource control and flexible transmission control which take the whole of the communications system into consideration. This embodiment can be combined with any one of above-mentioned Embodiments 1 to 3.

Embodiment 5.

Fig. 20 is a figure showing a flow of transmission control of a mobile station in accordance with Embodiment 5 of the present invention. Step 407a is different from those shown in Fig. 4 explained in Embodiment 1, and therefore the explanation of the same process steps as those shown in Fig. 4 will be omitted and only a different point will be explained. In Fig. 20, a process of shifting from step 407a in which the mobile station performs transmit power control to a E-TFC selection step 406 is added (the process being expressed by a thick line arrow in the figure). Fig. 21 shows a detailed flow of step 407a of Fig. 20. The flow differs from that shown in Fig. 12 explained in Embodiment 1 in that when YES in step 407g (i.e. , when the total transmit power exceeds the maximum transmit power Pmax even if the mobile station performs a channel transmit power scaling on only the E-DPDCH), the mobile station returns to step 406 of Fig. 20 and performs the E-TFC selection process again without performing any additional channel scaling (Additional scaling or Equal scaling). The explanation of the same process steps as those of Fig. 12 will be omitted hereafter, and only a different point will be explained.

Although when a transmission of packets is a retransmission, the transmission cannot be delayed because the transmission needs to be carried out according to a defined retransmission cycle (HARQ RTT: HARQ Round Trip Time), because the E-TFC selection is performed at the time of the first-time transmission, the transmission timing can afford some time delay within the limit that ensures a certain degree of communication quality (QoS). Therefore, by reflecting the status of the transmit power margin at a time closer to the transmission timing at which a transmit power control (TPC) command is applied in the E-TFC selection process, and then reselecting a transmission rate (E-TFC) at which data can be transmitted, there is provided an advantage of being able to reduce the average number of times that a retransmission of data has been carried out. That is, when the average number of times that a retransmission of data has been carried out can be reduced, the transmission delay can also be reduced and therefore the throughput can be improved.

As mentioned above, in accordance with this embodiment, because the details of the transmission control in a case in which a E-DCH channel is added are defined, there is provided an advantage of being able to make the transmission control operation of the mobile station become unique, and providing an improvement in the efficiency of the operation of the communications system. This embodiment can be combined with any one of above-mentioned Embodiments 1 to 4.

Embodiment 6.

Fig. 22 is a block diagram showing the structure of a mobile station in accordance with embodiment 6 of the present invention. The mobile station shown in Fig. 22 differs from the mobile station shown in Fig. 2 in that maximum transmit power control information (Pmax info) is notified from the modulating unit 205 to the transmission rate control unit 204 in the media access control unit 202. The maximum transmit power control information (Pmax info) can be notified from the modulating unit 205 to the transmission rate control unit 204 by using either a physical signal line or a primitive (primitive) which is a method of carrying out communications between protocol layers according to the 3GPP standards. The above-mentioned maximum transmit power control information (Pmax info) can include: (1) information indicating whether a channel power scaling has been performed on only the E-DPDCH; (2) information indicating whether the E-DPDCH has become an untransmission (DTX) state as a result of the channel power scaling on only the E-DPDCH; and (3) information indicating whether an additional channel scaling (Additional scalling or Equal scalling) has been performed.

Thus, the present embodiment offers an advantage of, when the E-DPDCH channel transmit power required to transmit data at the selected transmission rate (E-TFC) deviates from the transmit power with which data can be actually transmitted, being able to feed it back to the E-TFC restriction process or the E-TFC selection process, and hence to reduce the occurrence of retransmissions and the occurrence of a shortage of channel electric power, etc., thereby bringing efficiency to the transmission control.

As mentioned above, in accordance with this embodiment, because the details of the transmission control in a case in which a E-DCH channel is added are defined, there is provided an advantage of being able to make the transmission control operation of the mobile station become unique, and providing an improvement in the efficiency of the operation of the communications system. It is also possible to use the structure of the mobile station shown in Fig. 22 for implementation of the transmission control flow shown in Embodiment 5. Furthermore, in this embodiment, the maximum transmit power information (Pmax info) is notified from the modulating unit 205. As an alternative, the maximum transmit power information can be notified from the transmit power measurement and control unit 208, and the same advantage can be provided in this case. This embodiment can be combined with any one of above-mentioned Embodiments 1 to 5.

Embodiment 7.

Fig. 23 is a flow chart explaining a transmit power control process in accordance with Embodiment 7 of the present invention. Fig. 23 is shown for explaining in detail the transmit power control process of step 407 shown in Fig. 4, and includes some steps which are the same as those in the flow chart shown in Fig. 12. Therefore, in Fig. 23, because the same steps as those shown in Fig. 12 mean the same processes or like processes, the explanation of the steps will be omitted hereafter. In step 407f1a of Fig. 23, the gain factor (βed (,eff)) of the E-DPDCH becomes zero (the channel power of the E-DPDCH = 0) because of a channel power scaling on only the E-DPDCH, and, when any E-DPDCH data are not transmitted, the gain factor (βec) of the E-DPCCH is also made to become zero (the channel power of the E-DPCCH = 0).

The mobile station transmits a large volume of packet data using the E-DPDCH, and also transmits control data using the E-DPCCH. However, when packet data cannot be transmitted because of a shortage of the electric power, a transmission of only the control information results in the result of a judgment of reception of packet data by the fixed station being a NACK judgment, and therefore the mobile station needs to retransmit the data after all. Therefore, the transmission of only E-DPCCH data causes a waste of radio resources. Furthermore, because the number of times that a retransmission of the packet data has been carried out increases, the number of times that a retransmission of the packet data has been carried out easily reaches its maximum number of transmissions in the media access control unit 202 and this results in retransmission control in an upper protocol layer working. In general, because the higher the layer in which retransmission control is performed, the larger time delay is caused by the retransmission control, a serious problem arises. In this embodiment, a transmission via the E-DPCCH is also suspended when any E-DPDCH data cannot be transmitted. Therefore, particularly, by applying this embodiment to the first-time transmission, there is provided an advantage of being able to reduce the waste of the radio resources due to useless E-DPCCH transmissions. Because it is defined that in a case in which the DCH (DPDCH) is not set up, βed(,eff) can be set to zero, this embodiment can be applied only to this case.

As mentioned above, in accordance with this embodiment, because the details of the transmission control in a case in which a E-DCH channel is added are defined, there is provided an advantage of being able to make the transmission control operation of the mobile station become unique, and providing an improvement in the efficiency of the operation of the communications system. This embodiment can be combined with any one of above-mentioned Embodiments 1 to 6.

Embodiment 8.

Fig. 24 is a flow chart showing a transmission control process carried out by a mobile station in accordance with Embodiment 8 of the present invention. Fig. 24 differs from Fig. 4 in that it includes steps 410 and step 411 while the other steps are the same as those shown in Fig. 4. Because among the steps of Fig. 24, the same steps as those shown in Fig. 4 show the same processes or like processes, the explanation of the steps will be omitted hereafter. In the transmission control process shown in Fig. 24, when any DCH data transmission is not set up (Configuration) and a E-DCH transmission is set up (when YES in step 410), a process of transmitting DPCCH data is performed by using a DPCCH channel format in which any index (TFCI: TFC Index) for identifying a TFC is not transmitted (step 411). Concretely, in step 410, the mobile station checks to see whether any DCH data transmission is not set up and whether a E-DCH data transmission is set up. When, in step 410, YES (i.e. , when any DCH data transmission is not set up and a E-DCH data transmission is set up), the mobile station carries out the process of step 411 and sets up a DPCCH channel format in which any TFCI is not transmitted. The mobile station then carries out the process of step 404.

Because the DPCCH is a channel via which a pilot signal for maintenance of a physical radio connection or for radio demodulation by a receive side is transmitted, any DPCCH connection must be maintained even when any data are not transmitted using the DPDCH. Similarly, the same goes for a case in which E-DCH data are transmitted even if any DCH data are untransmitted. However, when any DCH transmission is not set up, it is not necessary to transmit any TFC information (TFCI). Therefore, there is provided an advantage of being able to avoid the above-mentioned problem by transmitting a DPCCH channel format in which any TFCI is untransmitted when any DCH data transmission is not set up and a E-DCH data transmission is set up. The channel format in which any TFCI is untransmitted can be newly defined, or can be specified by using a conventional format. When the power for only TFCIs is set to zero (untransmission), DPCCH transmissions become discontinuous, the receiving system of the fixed station, other mobile stations, hearing aids, etc. demodulate the envelope of power variations, and a so-called hearing aid problem arises. In this case, a pilot can be placed at the position of the TFCI of the channel format. In the case in which a pilot is placed at the position of the TFCI of the channel format, there is provided an advantage of being able to enable even a base station which complies with release 5 or the conventional standards earlier than release 5 (i.e., the backward compatibility is ensured) to perform a DPCCH reception as usual.

As mentioned above, in accordance with this embodiment, because the details of the transmission control in a case in which a E-DCH channel is added are defined, there is provided an advantage of being able to make the transmission control operation of the mobile station become unique, and providing an improvement in the efficiency of the operation of the communications system. This embodiment can be combined with any one of above-mentioned Embodiments 1 to 7. Each of the above-mentioned embodiments can be combined freely with any other one or more embodiments as long as its advantages or compound advantages can be acquired.

Industrial Applicability

The present invention can be applied to a radio communications system. More particularly, the present invention can be applied to mobile communication apparatus including a mobile phone which complies with the 3GPP standards.

## Claims

1. A mobile station comprising a transmission control means for, for each of a first physical data channel via which user data transmitted via a transport channel from an upper layer are transmitted to a fixed station and a second physical data channel which is an extension of said first physical data channel, selecting transmission control information including a transmission rate depending upon said user data, a multiplex modulation means for performing multiplex modulation on transmission data by using the transmission control information selected by said transmission control means and amplitude coefficients of said first physical data channel and said second physical data channel, and a transmit power control means for performing control of transmit power of a transmitting means which amplifies said transmission data in such a manner that said transmission data has predetermined transmit power, and which transmits said transmission data, **characterized in that**
said transmission control means judges whether the transmit power in a case of not transmitting a control channel via which control data about control of said second physical data channel are transmitted exceeds a maximum transmit power value so as to select the transmission control information about said first physical data channel.

2. The mobile station according to claim 1, **characterized in that** the transmission control means compares a transmit power margin which is calculated from the maximum transmit power and the transmit power with which the transmitting means performs transmission with transmit power of the second physical data channel, and selects the transmission control information about said second physical data channel in consideration of whether a transmission via said second physical data channel is performed.

3. The mobile station according to claim 1, **characterized in that** the transmit power control means performs control of the maximum transmit power using a parameter which defines the maximum transmit power according to a combination of whether transmissions via transmit channels including at least the first physical data channel and the second physical data channel are performed.

4. The mobile station according to claim 1, **characterized in that** the transmission control means compares a transmit power margin which is calculated from the maximum transmit power and the transmit power with which the transmitting means performs transmission with transmit power of the second physical data channel, and selects the transmission control information about said second physical data channel in consideration of whether a scaling process is performed on the transmit power of said second physical data channel.

5. The mobile station according to claim 1, **characterized in that** the transmission control means compares a transmit power margin which is calculated from the maximum transmit power and the transmit power with which the transmitting means performs transmission with transmit power of the second physical data channel, and selects the transmission control information about said second physical data channel in consideration of a number of times that a retransmission via said second physical data channel is performed.

6. The mobile station according to claim 1, **characterized in that** the transmission control means reselects the transmission control information about said second physical data channel when transmit power of the second physical data channel is scaled and exceeds the maximum transmit power.

7. The mobile station according to claim 1, **characterized in that** the transmission control means selects the transmission control information on a basis of maximum transmit power control information containing either of whether or not a scaling of transmit power of the second physical data channel is performed, whether or not a transmission via said second physical data channel is performed, and whether or not a scaling of the transmit power is performed, or all of them.

8. The mobile station according to claim 1, **characterized in that** when setting the amplitude coefficient of the second physical data channel to zero, the transmit power control means also sets an amplitude coefficient of the control channel to zero.

9. The mobile station according to claim 1, **characterized in that** when setting the amplitude coefficient of the second physical data channel to zero, the transmitting means does not transmit the transmission control information using the control channel.

10. A communications method comprising a transmission control information selection process of, for each of a first physical data channel via which user data transmitted via a transport channel from an upper layer are transmitted to a fixed station and a second physical data channel which is an extension of said first physical data channel, selecting transmission control information including a transmission rate depending upon said user data, a multiplex modulation process of performing multiplex modulation on transmission data by using the transmission control information selected in said transmission control information selection process and amplitude coefficients of said first physical data channel and said second physical data channel, and a transmit power control process of performing transmit power control in such a manner that said transmission data has predetermined transmit power, **characterized in that**
said transmission control information selection process is the one of judging whether the transmit power in a case of not transmitting a control channel via which control data about control of said second physical data channel are transmitted exceeds a maximum transmit power value so as to select the transmission control information about said first physical data channel.

11. The communications method according to claim 10, **characterized in that** the transmission control information selection process is the one of comparing a transmit power margin which is calculated from the maximum transmit power and transmit power of a transmission signal which is transmitted to a fixed station with transmit power of the second physical data channel, and selecting the transmission control information about said second physical data channel in consideration of whether a transmission via said second physical data channel is performed.

12. The communications method according to claim 10, **characterized in that** the transmission control information selection process is the one of performing control of the maximum transmit power using a parameter which defines the maximum transmit power according to a combination of whether transmissions via transmit channels including at least the first physical data channel and the second physical data channel are performed.

13. The communications method according to claim 10, **characterized in that** the transmission control information selection process is the one of comparing a transmit power margin which is calculated from the maximum transmit power and transmit power of a transmission signal which is transmitted to a fixed station with transmit power of the second physical data channel, and selecting the transmission control information about said second physical data channel in consideration of whether a scaling process is performed on the transmit power of said second physical data channel.

14. The communications method according to claim 10, **characterized in that** the transmission control information selection process is the one of comparing a transmit power margin which is calculated from the maximum transmit power and transmit power of a transmission signal which is transmitted to a fixed station with transmit power of the second physical data channel, and selecting the transmission control information about said second physical data channel in consideration of a number of times that a retransmission via said second physical data channel is performed.

15. The communications method according to claim 10, **characterized in that** the transmission control information selection process is the one of reselecting the transmission control information about said second physical data channel when transmit power of the second physical data channel is scaled and exceeds the maximum transmit power.

**16.** The communications method according to claim 10, **characterized in that** the transmission control information selection process is the one of selecting the transmission control information on a basis of maximum transmit power control information containing either of whether or not a scaling of transmit power of the second physical data channel has been performed, whether or not a transmission via said second physical data channel has been performed, and whether or not a scaling of the transmit power has been performed, or all of them.

**17.** The communications method according to claim 10, **characterized in that** the transmit power control process has a process of, when setting the amplitude coefficient of the second physical data channel to zero, also setting an amplitude coefficient of the control channel to zero.

**18.** The communications method according to claim 10, **characterized in that** the transmission process has a process of, when setting the amplitude coefficient of the second physical data channel to zero, not transmitting the transmission control information using the control channel.

FIG.1

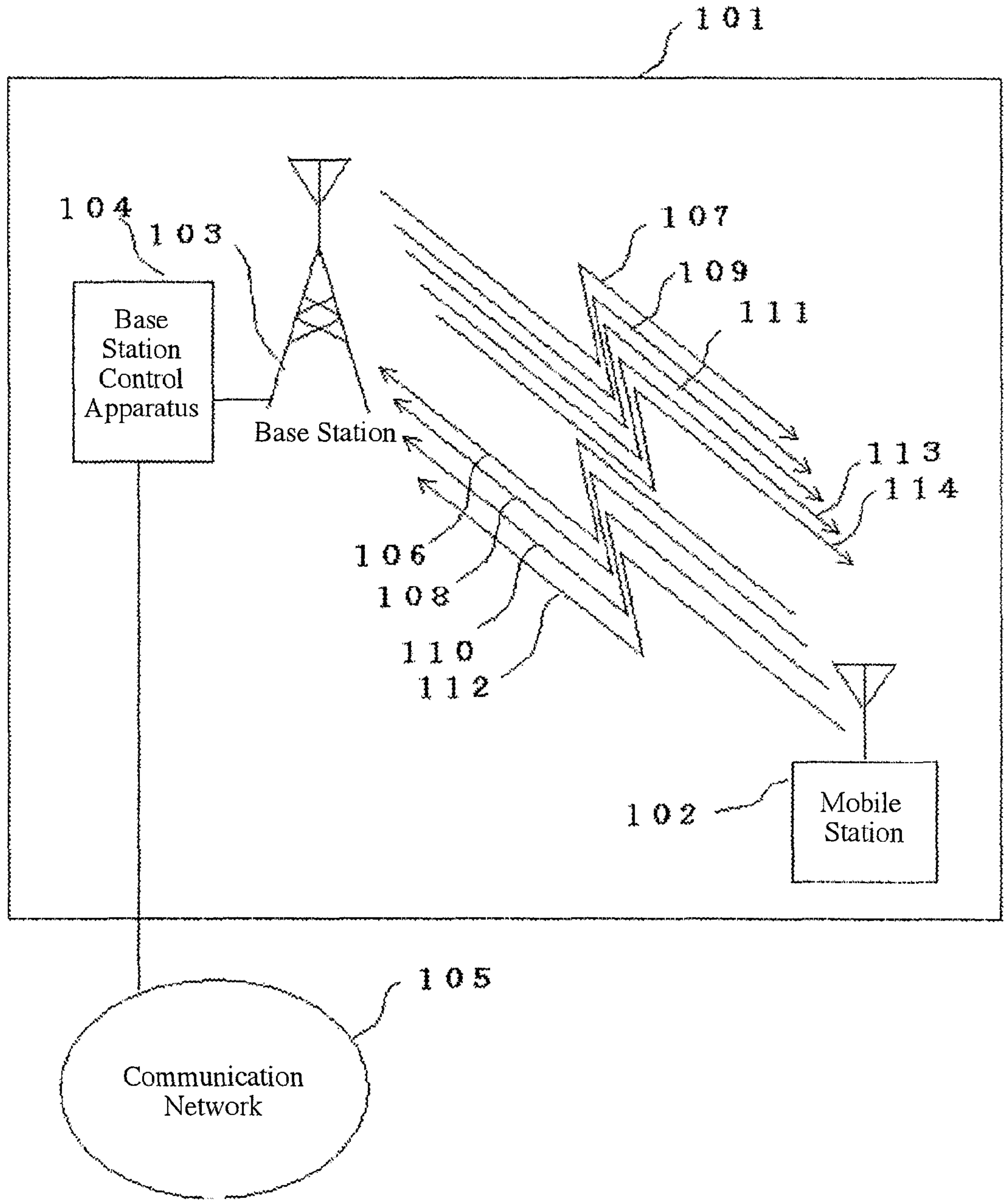
101
104
103
Base Station Control Apparatus
Base Station
107
109
111
113
114
106
108
110
112
102
Mobile Station
105
Communication Network

FIG.2

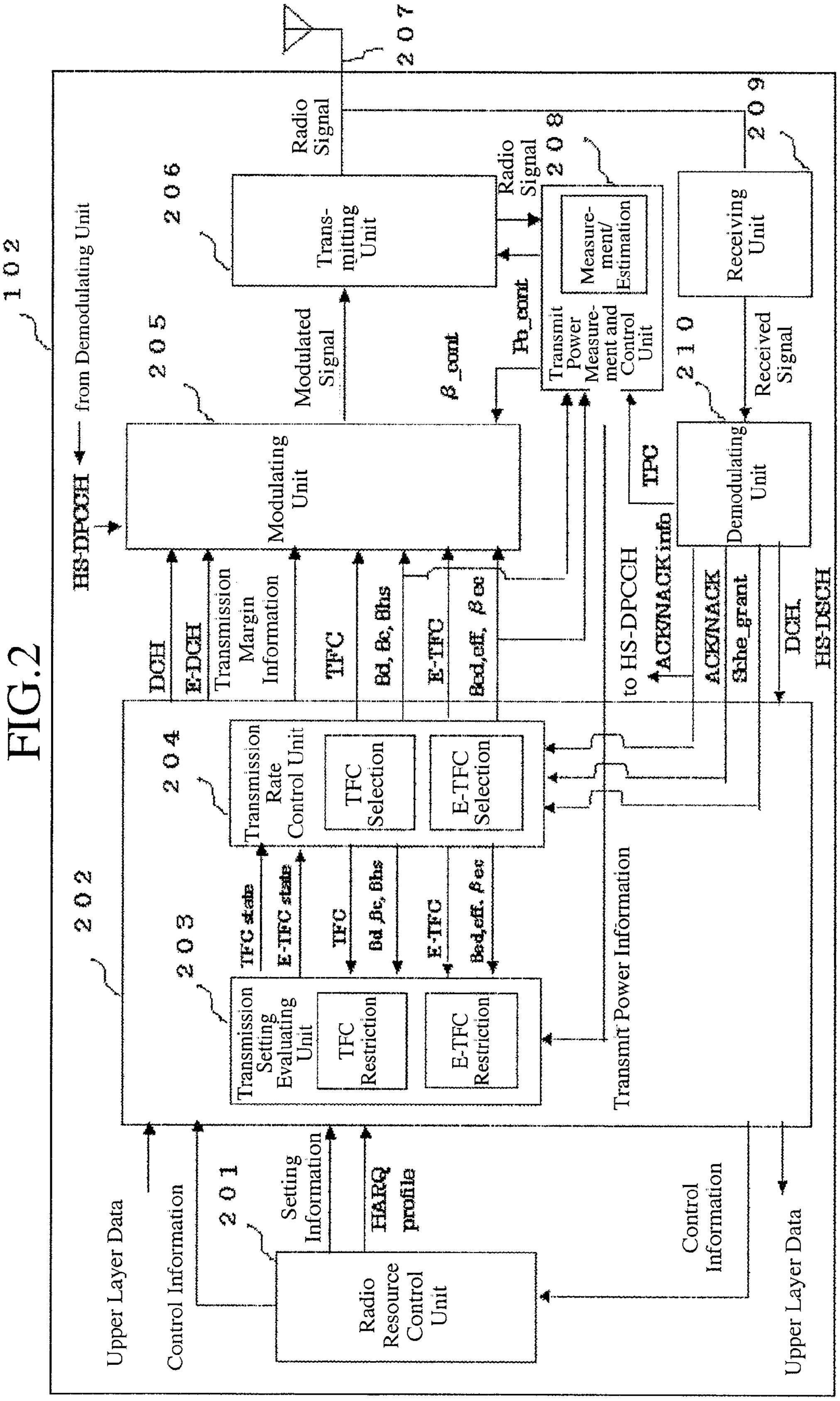
102
from Demodulating Unit
HS-DPCCH
Modulating Unit
205
Modulated Signal
Trans-mitting Unit
206
Radio Signal
207
Radio Signal
208
Transmit Power Measure-ment and Control Unit
Measure-ment/ Estimation
Receiving Unit
209
Received Signal
210
Demodulating Unit
TPC
β_cont
Po_cont
DCH
E-DCH
Transmission Margin Information
TFC
βd, βc, βhs
E-TFC
βed,eff, βec
to HS-DPCCH
ACK/NACK info
ACK/NACK
Sche_grant
DCH, HS-DSCH
202
204
Transmission Rate Control Unit
TFC Selection
E-TFC Selection
203
Transmission Setting Evaluating Unit
TFC Restriction
E-TFC Restriction
TFC state
E-TFC state
TFC
βd, βc, βhs
E-TFC
βed,eff, βec
Transmit Power Information
201
Radio Resource Control Unit
Upper Layer Data
Control Information
Setting Information
HARQ profile
Control Information
Upper Layer Data

FIG.3

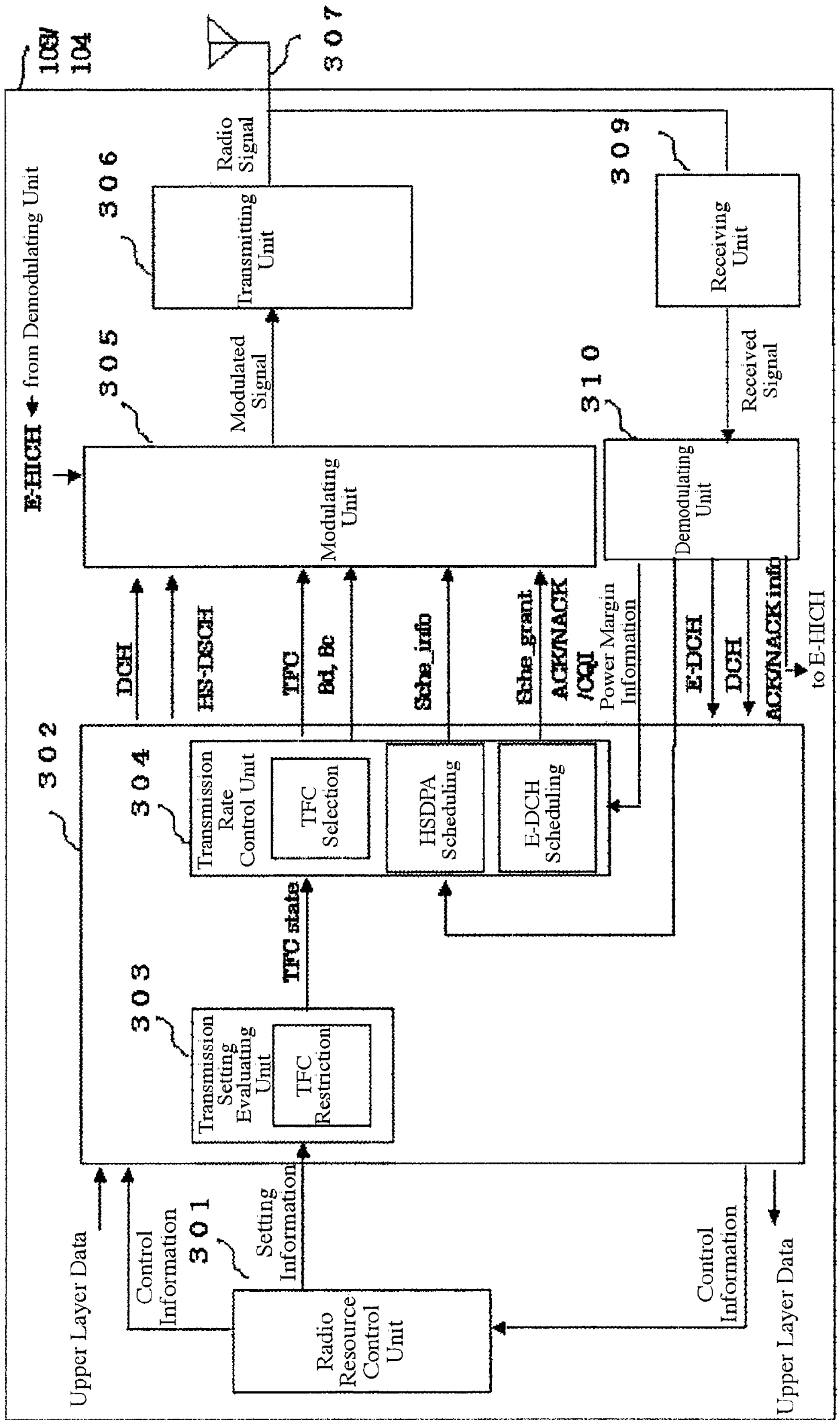
103/104
307
Radio Signal
306
Transmitting Unit
309
Receiving Unit
Modulated Signal
305
Received Signal
310
E-HICH
from Demodulating Unit
Modulating Unit
Demodulating Unit
DCH
HS-DSCH
TFC
Bd, Bc
Sche_info
Sche_grant
ACK/NACK /CQI
Power Margin Information
E-DCH
DCH
ACK/NACK info
to E-HICH
302
304
Transmission Rate Control Unit
TFC Selection
HSDPA Scheduling
E-DCH Scheduling
TFC state
303
Transmission Setting Evaluating Unit
TFC Restriction
Upper Layer Data
Control Information
301
Setting Information
Radio Resource Control Unit
Control Information
Upper Layer Data

FIG.4

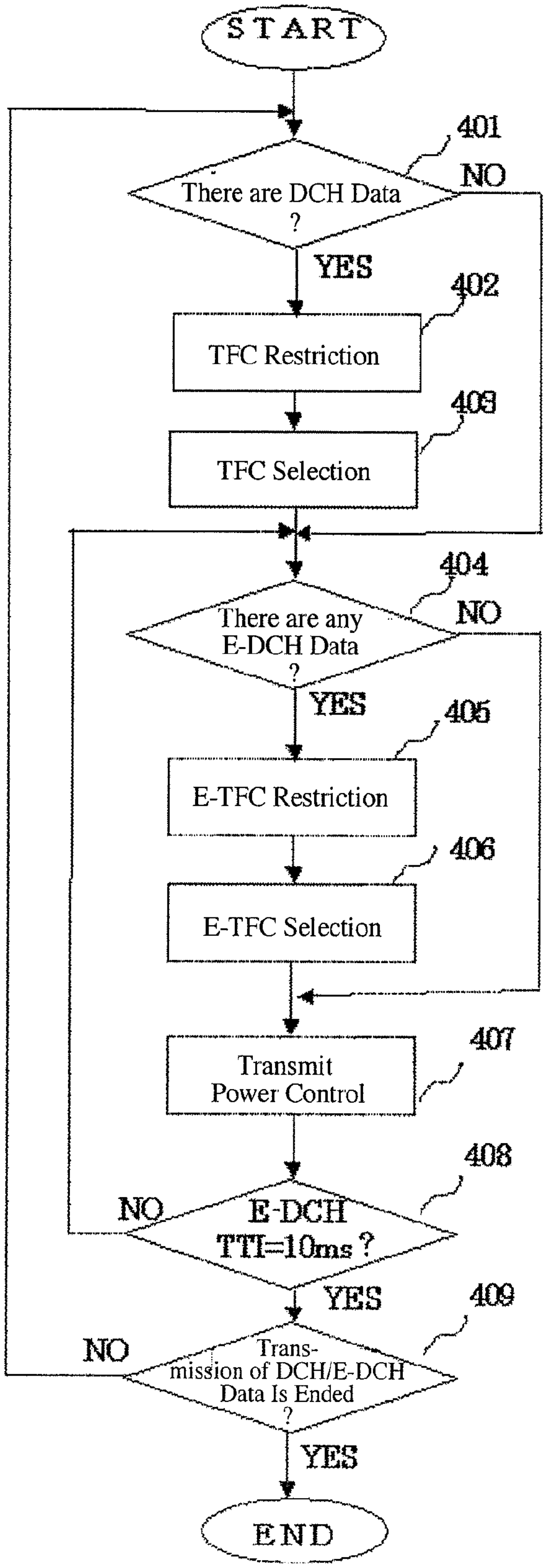
START
401
There are DCH Data ?
NO
YES
402
TFC Restriction
403
TFC Selection
404
There are any E-DCH Data ?
NO
YES
405
E-TFC Restriction
406
E-TFC Selection
407
Transmit Power Control
408
E-DCH TTI=10ms ?
NO
YES
409
Trans-mission of DCH/E-DCH Data Is Ended ?
NO
YES
END

FIG.5

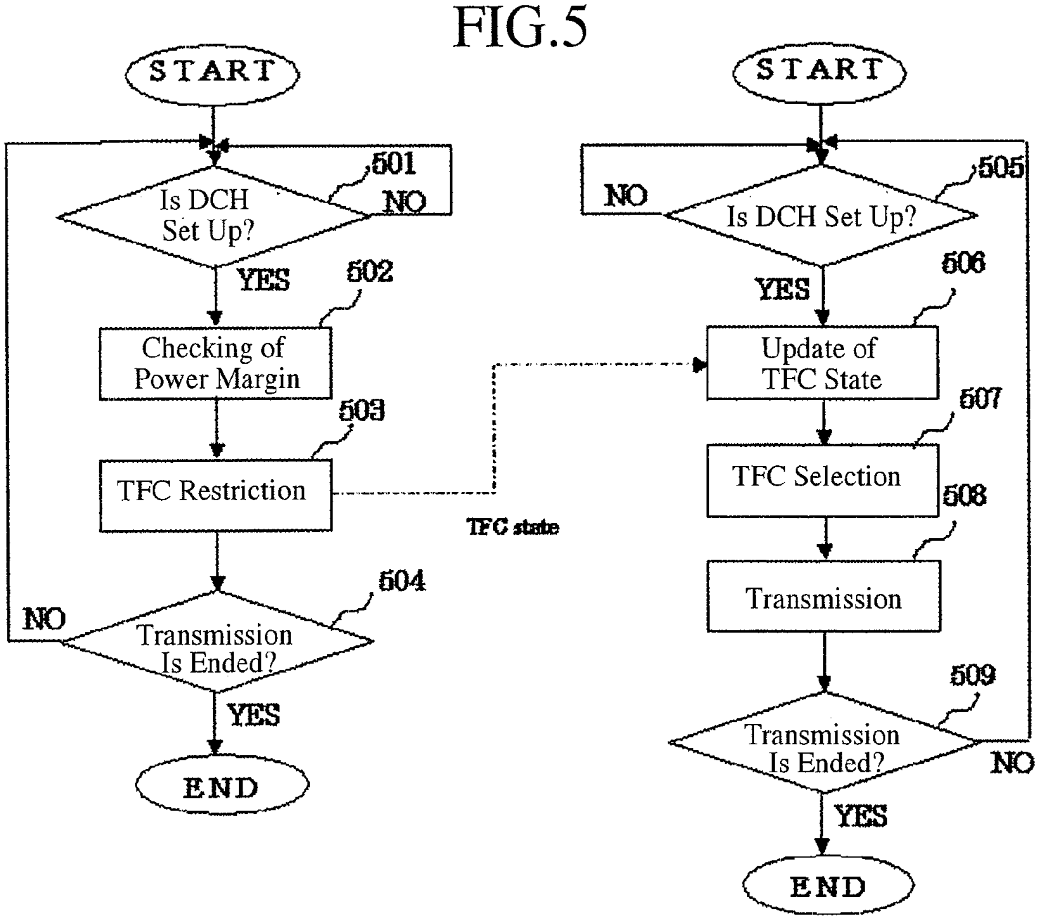
START
501
Is DCH Set Up?
NO
YES
502
Checking of Power Margin
503
TFC Restriction
504
NO
Transmission Is Ended?
YES
END
TFC state
START
505
NO
Is DCH Set Up?
506
YES
Update of TFC State
507
TFC Selection
508
Transmission
509
Transmission Is Ended?
NO
YES
END

FIG.6

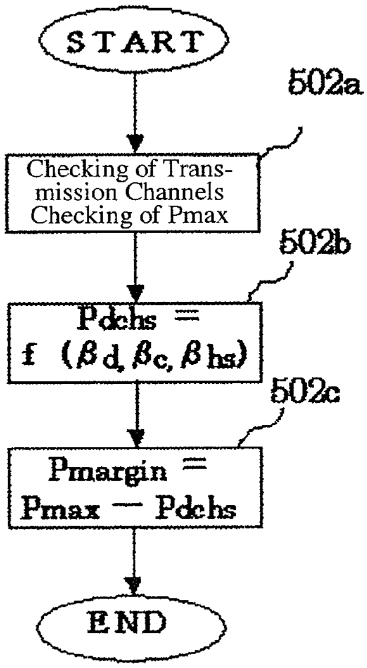
START
502a
Checking of Trans-mission Channels Checking of Pmax
502b
Pdchs = f (βd, βc, βhs)
502c
Pmargin = Pmax − Pdchs
END

FIG.7

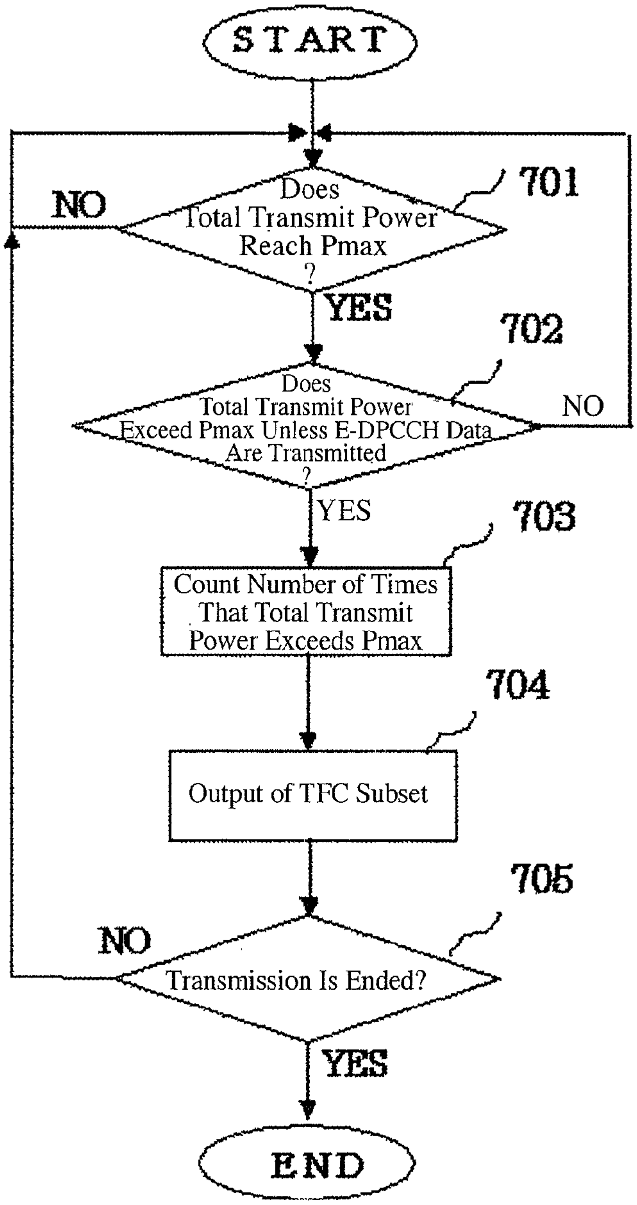
START
Does Total Transmit Power Reach Pmax ?
701
NO
YES
Does Total Transmit Power Exceed Pmax Unless E-DPCCH Data Are Transmitted ?
702
NO
YES
Count Number of Times That Total Transmit Power Exceeds Pmax
703
Output of TFC Subset
704
Transmission Is Ended?
705
NO
YES
END

FIG.8

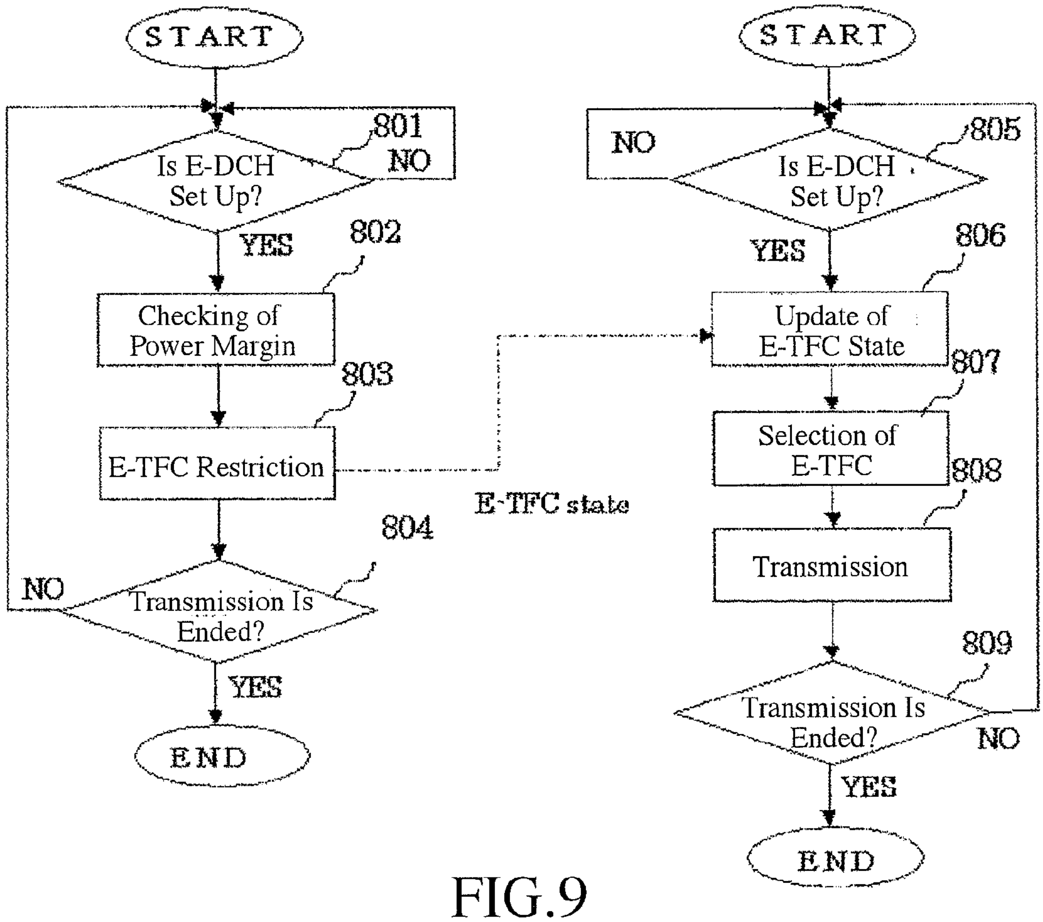
START
Is E-DCH Set Up?
801
NO
YES
802
Checking of Power Margin
803
E-TFC Restriction
804
Transmission Is Ended?
NO
YES
END
E-TFC state
START
NO
Is E-DCH Set Up?
805
YES
806
Update of E-TFC State
807
Selection of E-TFC
808
Transmission
809
Transmission Is Ended?
NO
YES
END

FIG.9

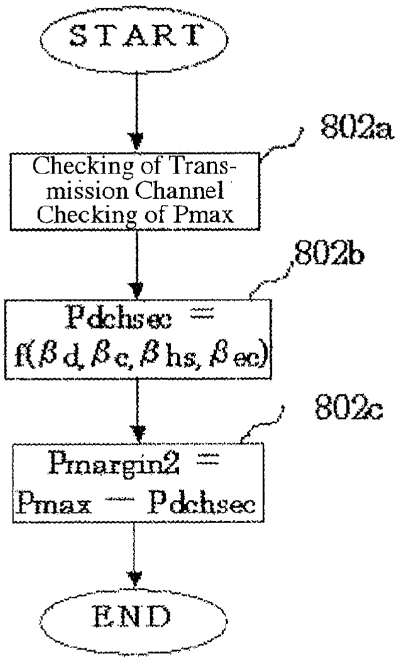
START
Checking of Transmission Channel
Checking of Pmax
802a
Pdchsec = f(βd, βc, βhs, βec)
802b
Pmargin2 = Pmax − Pdchsec
802c
END

FIG.10

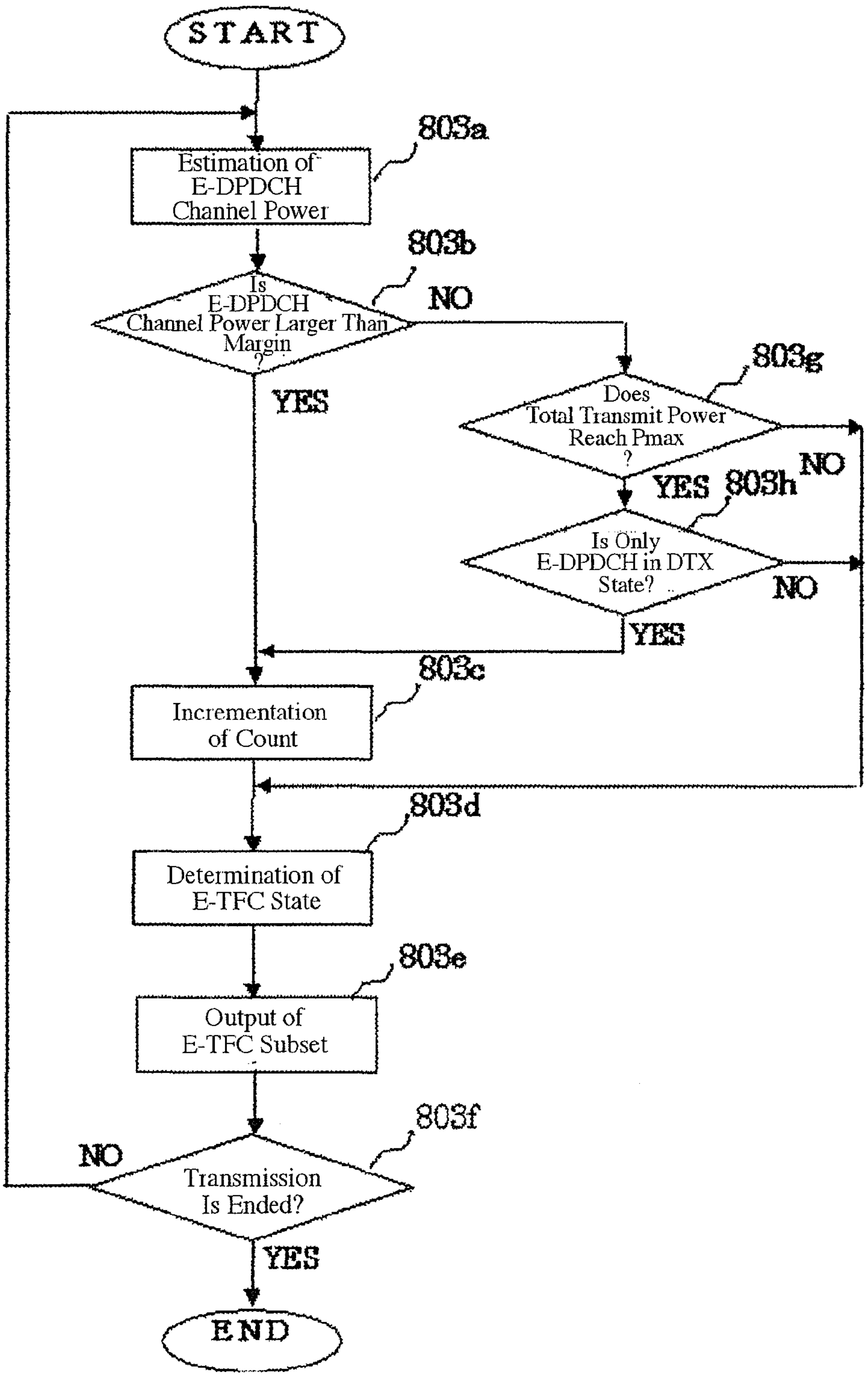
START
803a
Estimation of E-DPDCH Channel Power
803b
Is E-DPDCH Channel Power Larger Than Margin ?
NO
YES
803g
Does Total Transmit Power Reach Pmax ?
NO
YES
803h
Is Only E-DPDCH in DTX State?
NO
YES
803c
Incrementation of Count
803d
Determination of E-TFC State
803e
Output of E-TFC Subset
803f
Transmission Is Ended?
NO
YES
END

FIG.11

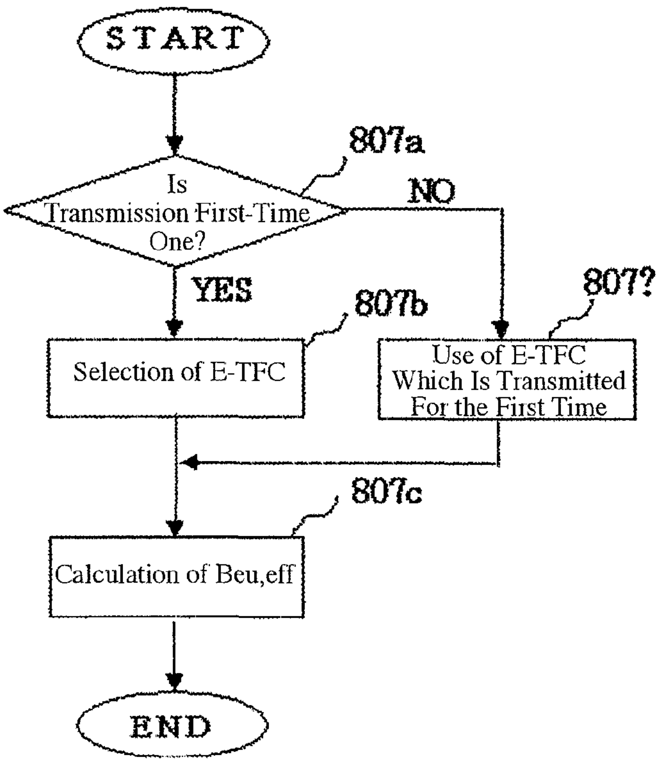
START
807a
Is Transmission First-Time One?
NO
YES
807b
807?
Selection of E-TFC
Use of E-TFC Which Is Transmitted For the First Time
807c
Calculation of Beu,eff
END

FIG.12

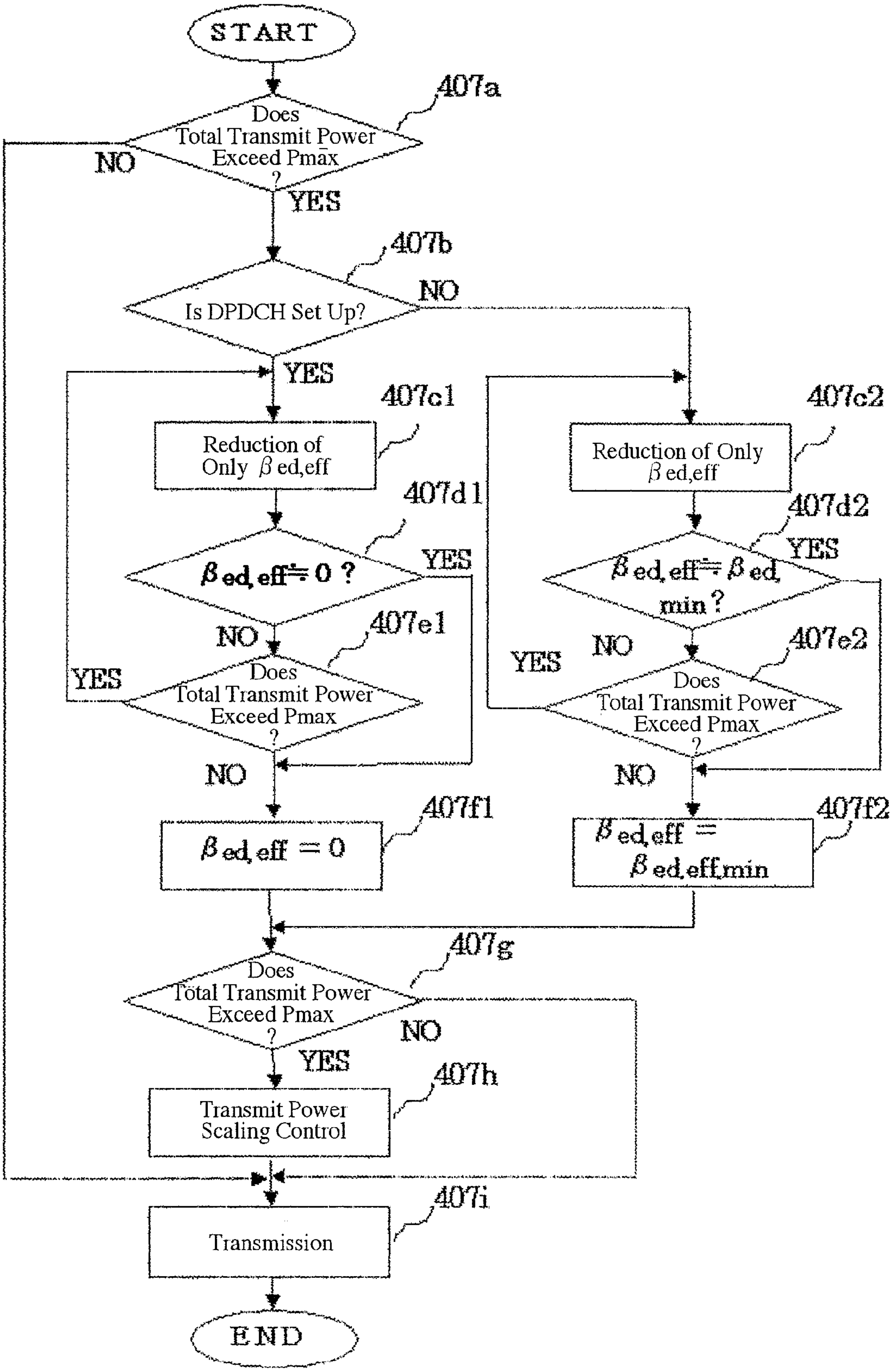
START
407a
Does Total Transmit Power Exceed Pmax ?
NO
YES
407b
Is DPDCH Set Up?
NO
YES
407c1
Reduction of Only β ed,eff
407c2
Reduction of Only β ed,eff
407d1
β ed, eff ≒ 0 ?
YES
NO
407d2
β ed, eff ≒ β ed, min ?
YES
NO
407e1
Does Total Transmit Power Exceed Pmax ?
YES
NO
407e2
Does Total Transmit Power Exceed Pmax ?
YES
NO
407f1
β ed, eff = 0
407f2
β ed, eff = β ed, eff, min
407g
Does Total Transmit Power Exceed Pmax ?
NO
YES
407h
Transmit Power Scaling Control
407i
Transmission
END

FIG.13

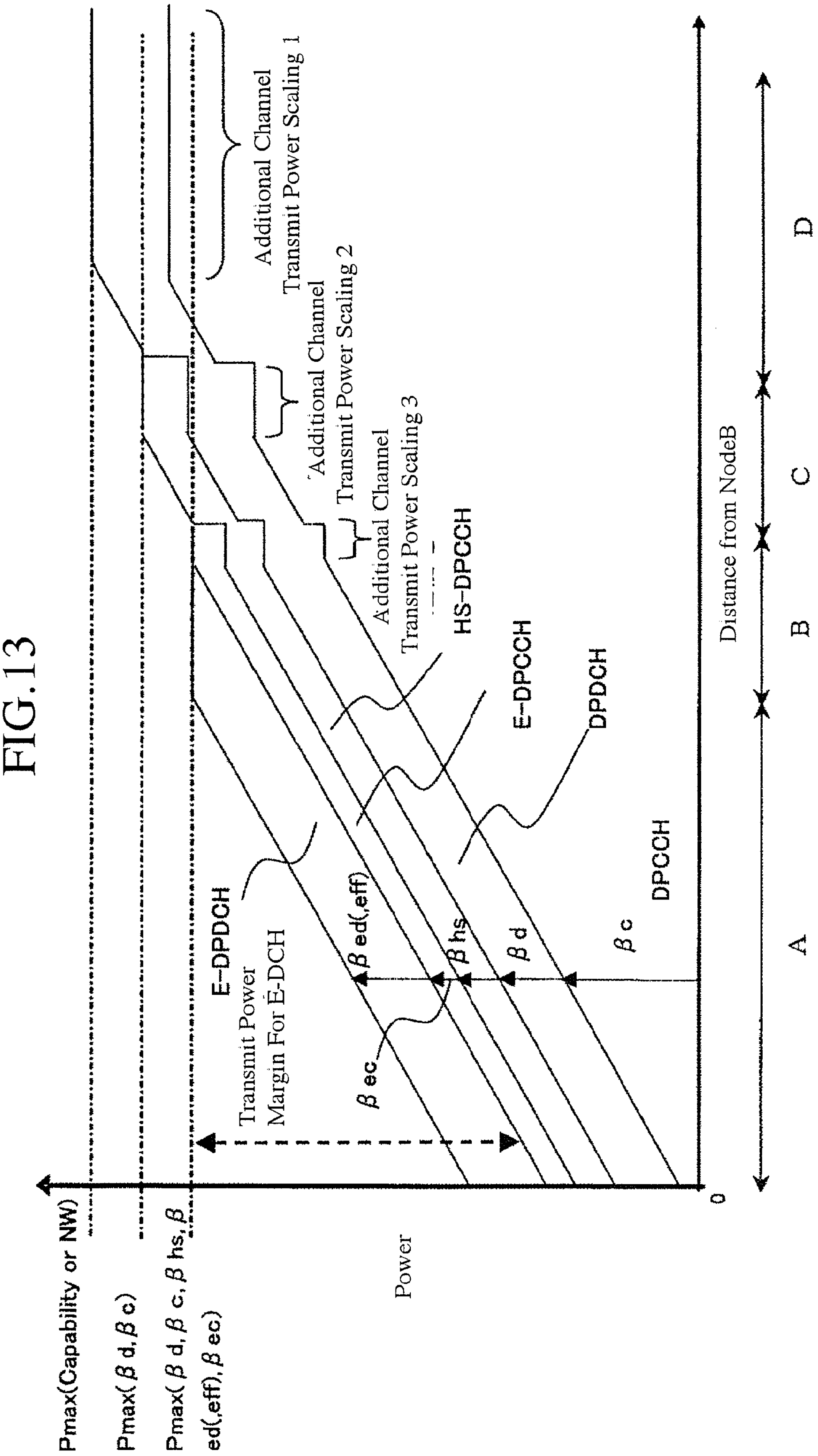
Pmax(Capability or NW)
Pmax(β d, β c)
Pmax(β d, β c, β hs, β ed(,eff), β ec)
Power
0
Distance from NodeB
A
B
C
D
Transmit Power Margin For E-DCH
E-DPDCH
β ec
β ed(,eff)
β hs
β d
β c
DPCCH
DPDCH
E-DPCCH
HS-DPCCH
Additional Channel Transmit Power Scaling 1
Additional Channel Transmit Power Scaling 2
Additional Channel Transmit Power Scaling 3

FIG.14

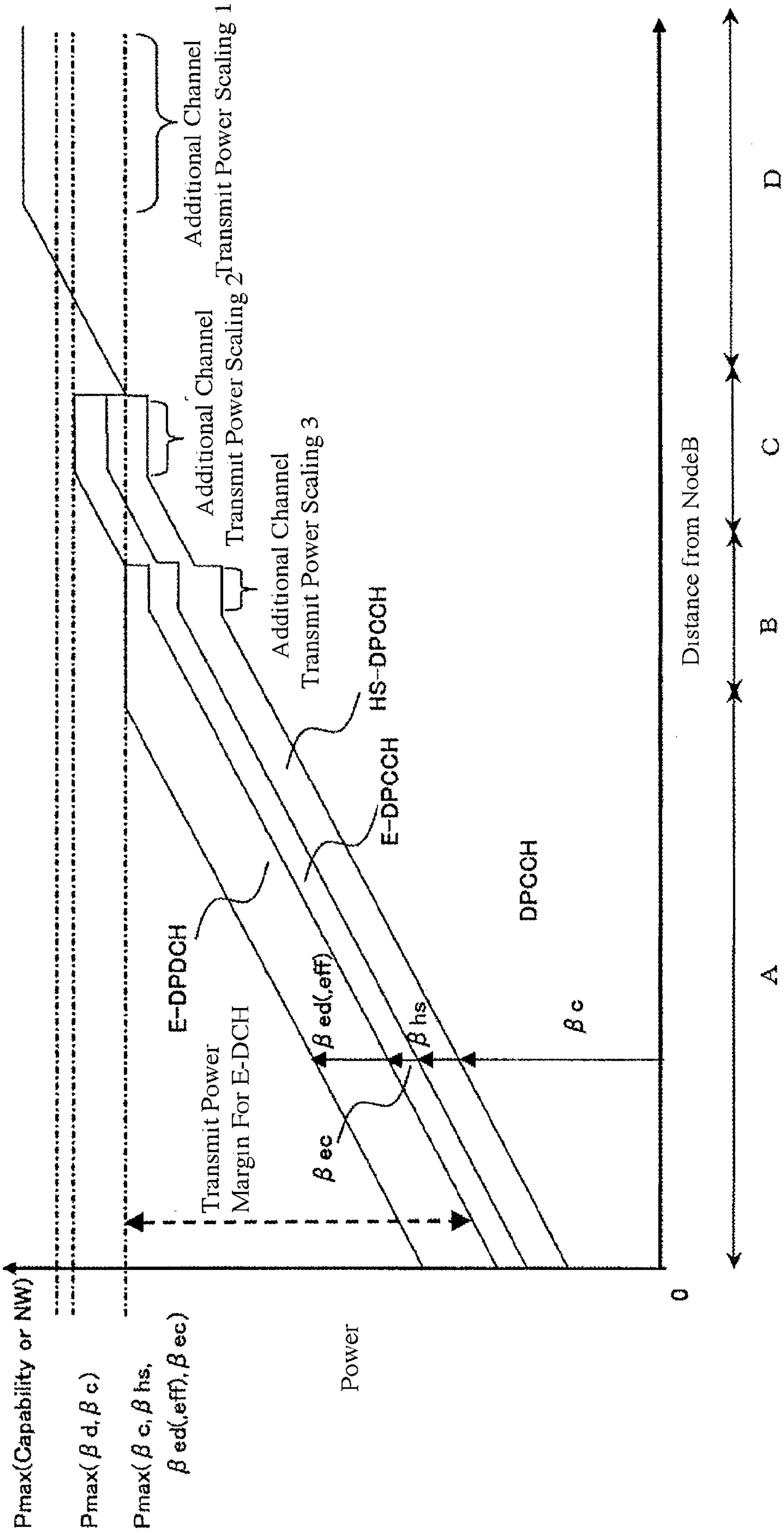
Pmax(Capability or NW)
Pmax(β d, β c)
Pmax(β c, β hs, β ed(,eff), β ec)
Power
0
Transmit Power Margin For E-DCH
β ec
β ed(,eff)
β hs
β c
E-DPDCH
E-DPCCH
HS-DPCCH
DPCCH
Additional Channel Transmit Power Scaling 1
Additional Channel Transmit Power Scaling 2
Additional Channel Transmit Power Scaling 3
Distance from NodeB
A
B
C
D

FIG.15

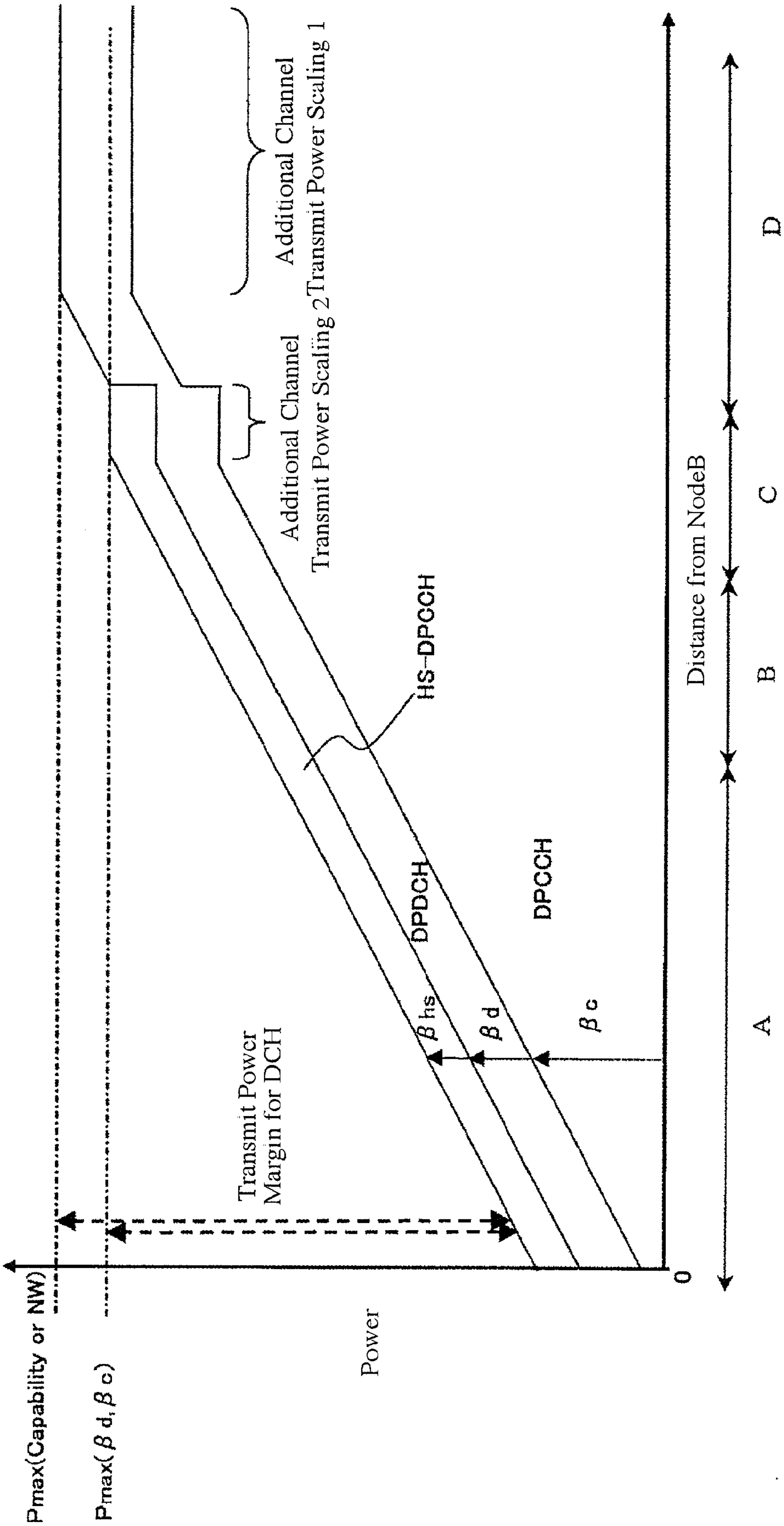
Pmax(Capability or NW)
Pmax(β d, β c)
Power
Transmit Power Margin for DCH
β hs
β d
β c
DPDCH
DPCCH
HS-DPCCH
Additional Channel Transmit Power Scaling 2
Additional Channel Transmit Power Scaling 1
Distance from NodeB
0
A
B
C
D

FIG.16

| Input of E-TFC Selection | | | | | | | | ETFC-MPR (dB) |
|---|---|---|---|---|---|---|---|---|
| Case | DPCCH | HS-DPCCH | DPDCH | E-DPCCH | E-DPDCH | E-DPDCH | | |
| | | | | | | SFmin | Ncodes | |
| 1 | ON | ON | OFF | OFF | OFF | NA | 0 | [1.00] |
| 2 | ON | OFF | OFF | ON | ON | ≥4 | 1 | [0.25] |
| 3 | ON | ON | OFF | ON | ON | 4 | 1 | [0.00] |
| 4 | ON | Both | OFF | ON | ON | 4 | 2 | [0.10] |
| 5 | ON | Both | OFF | ON | ON | 2 | 2 | [0.00] |
| 6 | ON | Both | OFF | ON | ON | 2 | 4 | [0.50] |
| 7 | ON | OFF | ON | ON | ON | ≥4 | 1 | [0.75] |
| 8 | ON | ON | ON | ON | ON | ≥4 | 1 | [1.40] |
| 9 | ON | Both | ON | ON | ON | 4 | 2 | [0.70] |
| 10 | ON | OFF | ON | ON | ON | 2 | 2 | [0.50] |
| 11 | ON | ON | ON | ON | ON | 2 | 2 | [0.50] |

FIG.17

| Input of E-TFC Selection | | | | | | | | ETFC-MPR (dB) |
|---|---|---|---|---|---|---|---|---|
| Case | DPCCH | HS-DPCCH | DPDCH | E-DPCCH | E-DPDCH | E-DPDCH Category | | |
| | | | | | | SFmin | Ncodes | |
| 1 | ON | ON | OFF | OFF | OFF | NA | 0 | [1.00] |
| 2 | ON | OFF | OFF | ON | ON | ≥4 | 1 | [0.25] |
| 3 | ON | ON | OFF | ON | ON | 4 | 1 | [0.00] |
| 4 | ON | Both | OFF | ON | ON | 4 | 2 | [0.10] |
| 5 | ON | Both | OFF | ON | ON | 2 | 2 | [0.00] |
| 6 | ON | Both | OFF | ON | ON | 2 | 4 | [0.50] |
| 7 | ON | OFF | ON | ON | ON | ≥4 | 1 | [0.75] |
| 8 | ON | ON | ON | ON | ON | ≥4 | 1 | [1.40] |
| 9 | ON | Both | ON | ON | ON | 4 | 2 | [0.70] |
| 10 | ON | OFF | ON | ON | ON | 2 | 2 | [0.50] |
| 11 | ON | ON | ON | ON | ON | 2 | 2 | [0.50] |

FIG.18

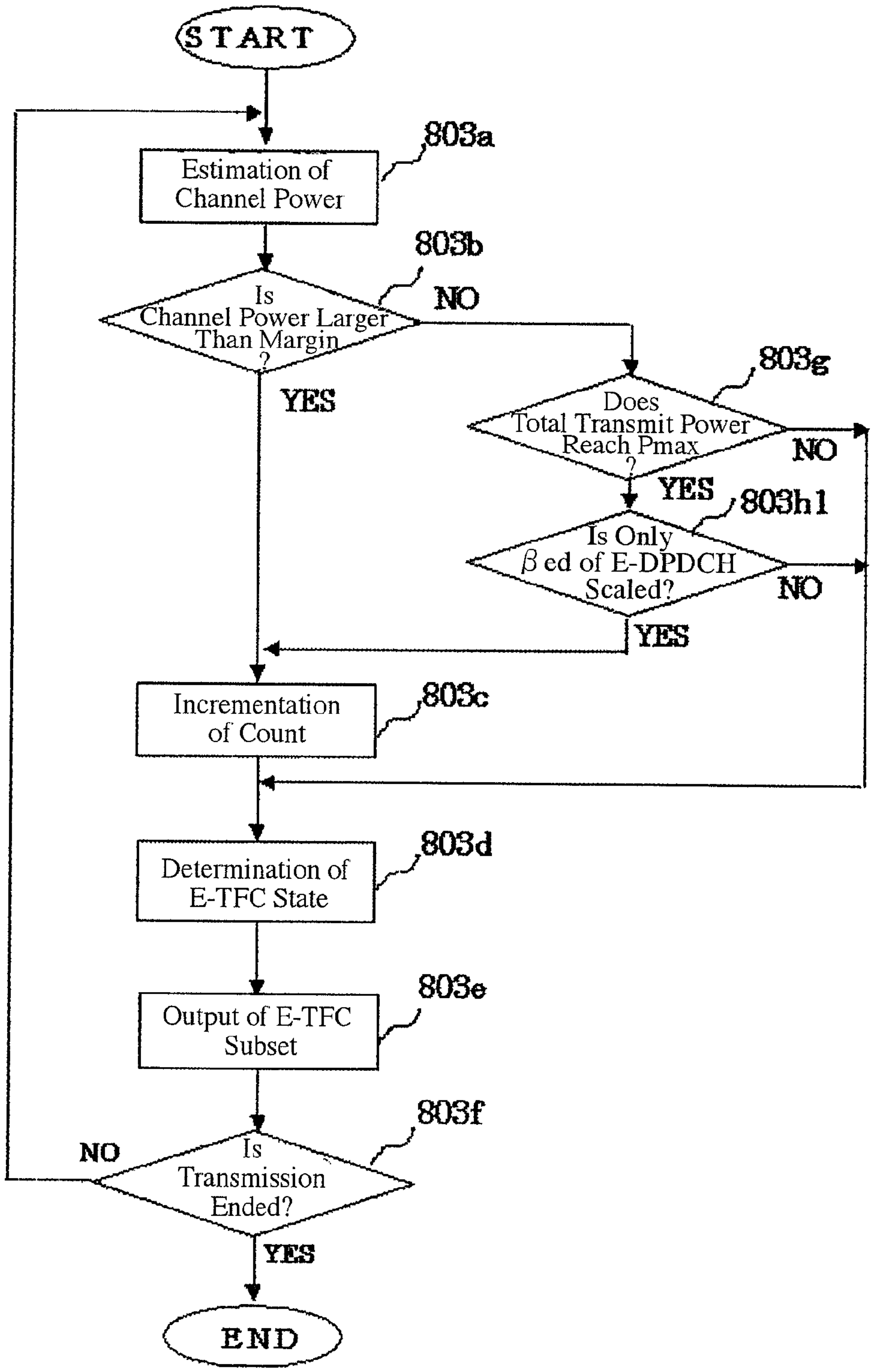
START
803a
Estimation of Channel Power
803b
Is Channel Power Larger Than Margin ?
NO
YES
803g
Does Total Transmit Power Reach Pmax ?
NO
YES
803h1
Is Only β ed of E-DPDCH Scaled?
NO
YES
803c
Incrementation of Count
803d
Determination of E-TFC State
803e
Output of E-TFC Subset
803f
Is Transmission Ended?
NO
YES
END

FIG.19

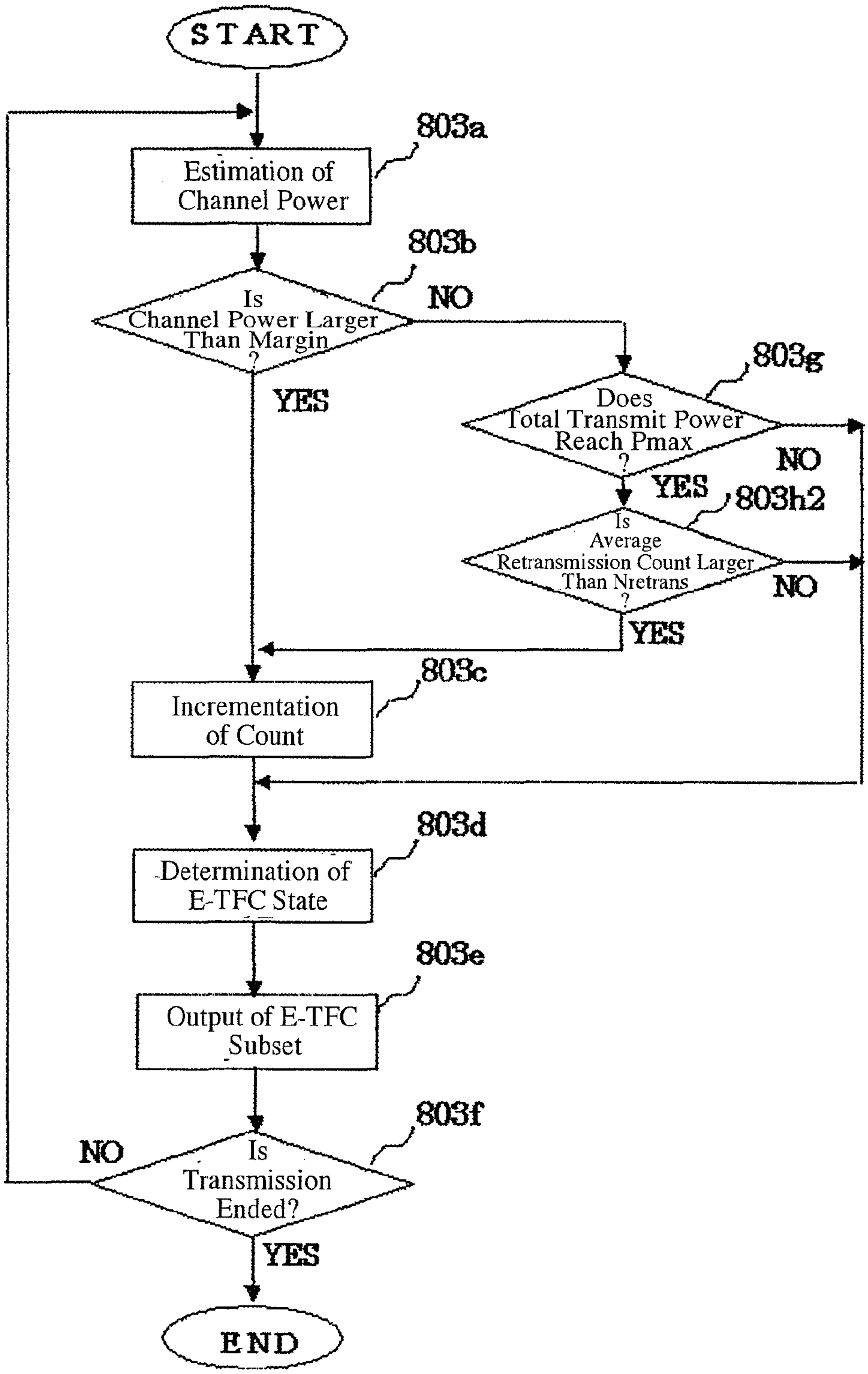
START
803a
Estimation of Channel Power
803b
Is Channel Power Larger Than Margin ?
NO
YES
803g
Does Total Transmit Power Reach Pmax ?
NO
YES
803h2
Is Average Retransmission Count Larger Than Nretrans ?
NO
YES
803c
Incrementation of Count
803d
Determination of E-TFC State
803e
Output of E-TFC Subset
803f
Is Transmission Ended?
NO
YES
END

FIG.20

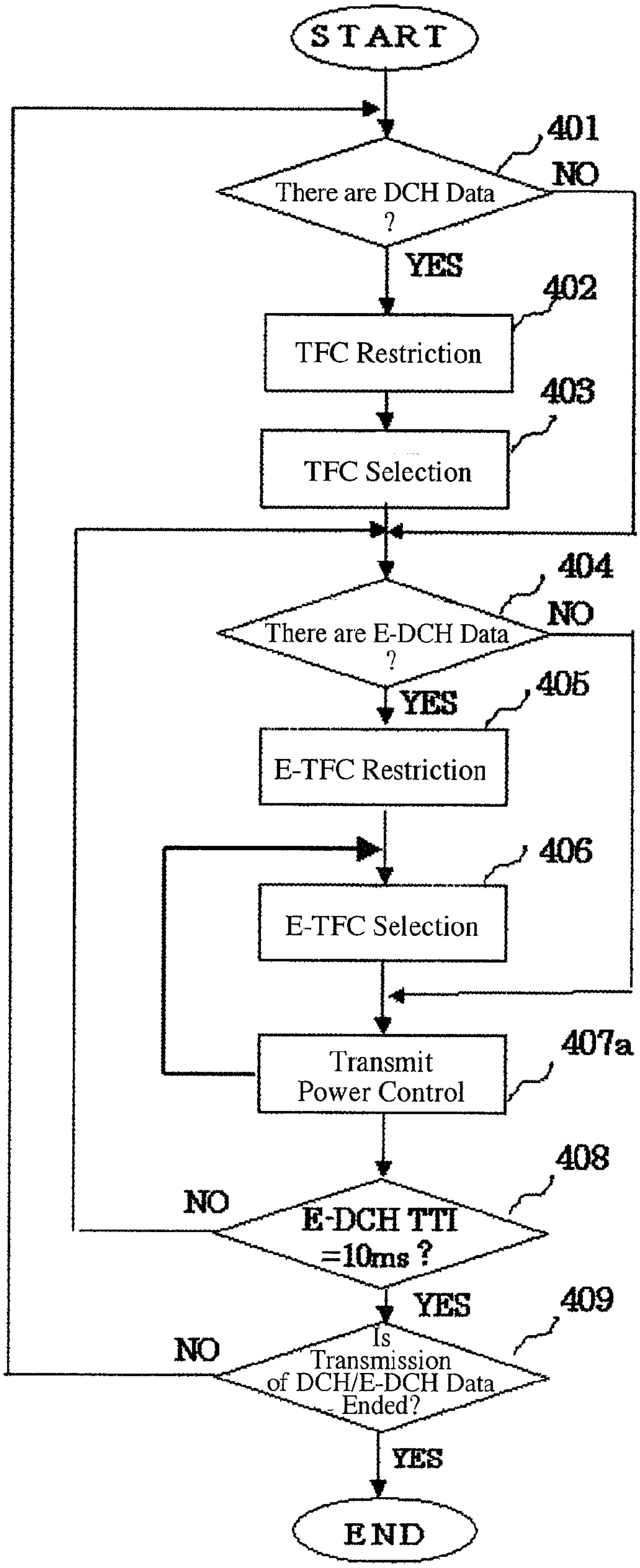
START
401
There are DCH Data ?
NO
YES
402
TFC Restriction
403
TFC Selection
404
There are E-DCH Data ?
NO
YES
405
E-TFC Restriction
406
E-TFC Selection
407a
Transmit Power Control
408
NO
E-DCH TTI =10ms ?
YES
409
NO
Is Transmission of DCH/E-DCH Data Ended?
YES
END

FIG.21

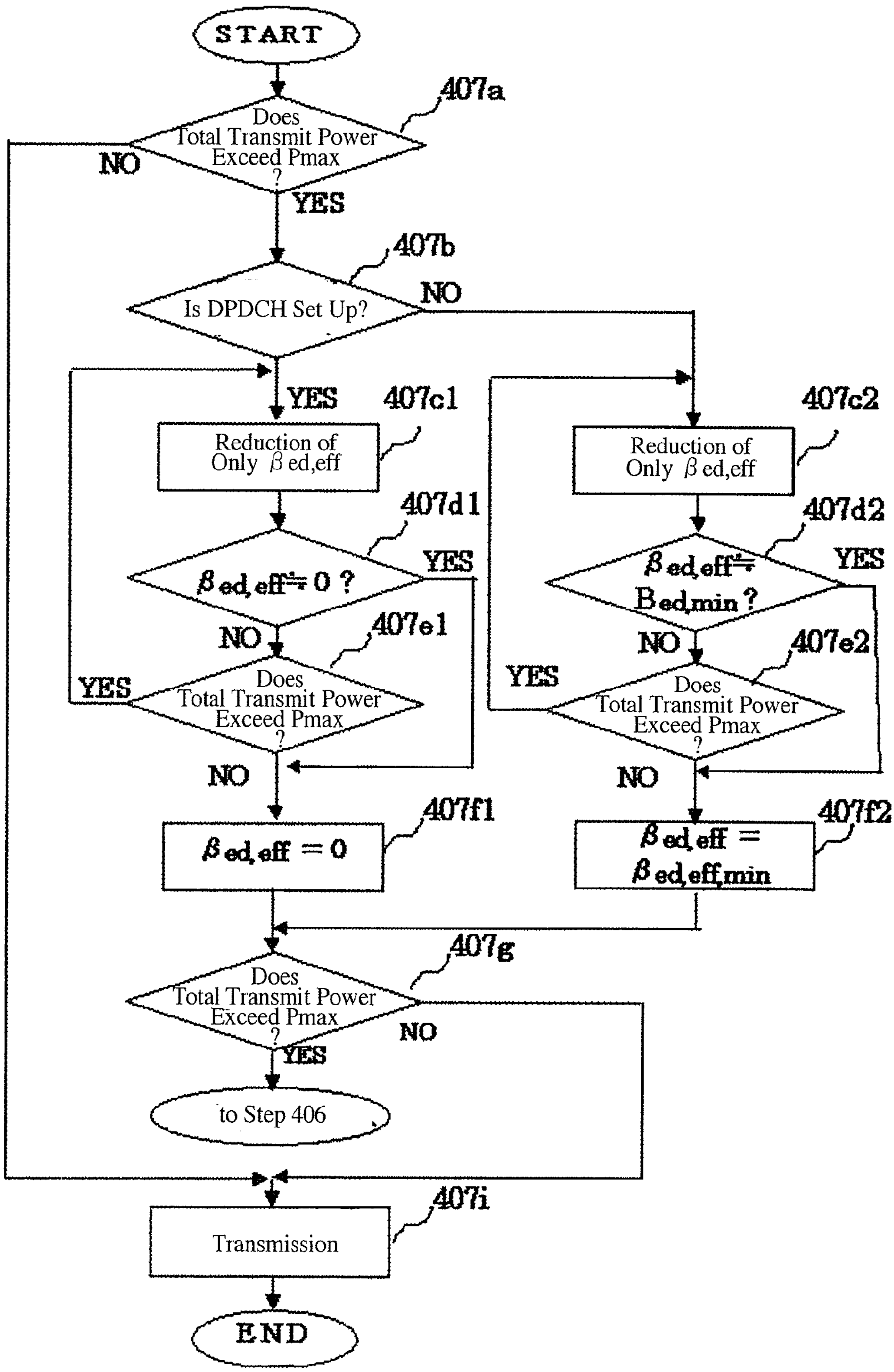
START
407a
Does Total Transmit Power Exceed Pmax ?
NO
YES
407b
Is DPDCH Set Up?
NO
YES
407c1
Reduction of Only β ed,eff
407c2
Reduction of Only β ed,eff
407d1
β ed,eff ≒ 0 ?
YES
NO
407e1
Does Total Transmit Power Exceed Pmax ?
YES
NO
407d2
β ed,eff ≒ Bed,min ?
YES
NO
407e2
Does Total Transmit Power Exceed Pmax ?
YES
NO
407f1
β ed,eff = 0
407f2
β ed,eff = β ed,eff,min
407g
Does Total Transmit Power Exceed Pmax ?
NO
YES
to Step 406
407i
Transmission
END

FIG.22

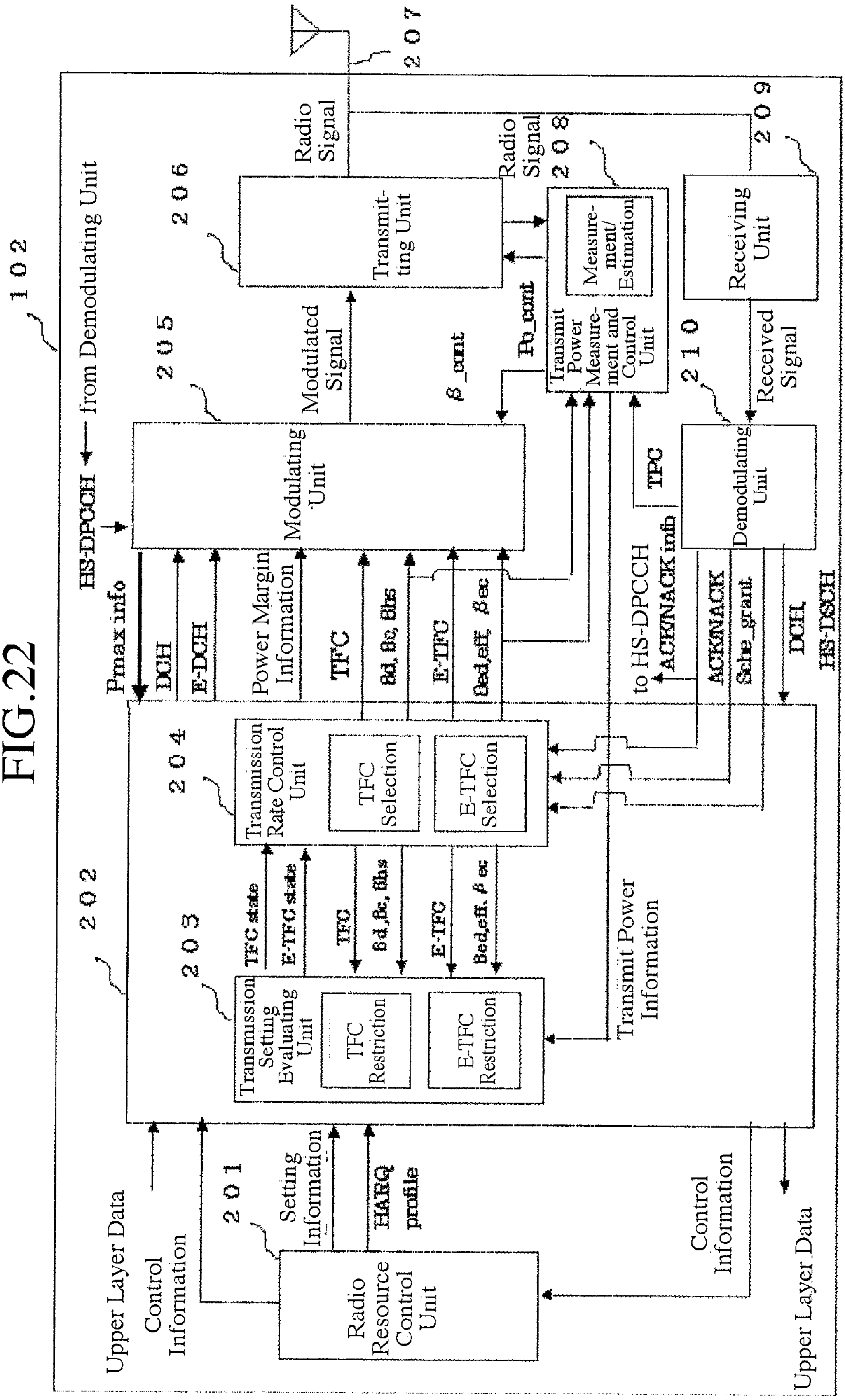
102
from Demodulating Unit
HS-DPCCH
205
Modulating Unit
Modulated Signal
206
Transmitting Unit
Radio Signal
207
Radio Signal
208
Transmit Power Measurement and Control Unit
Measurement/ Estimation
209
Receiving Unit
Received Signal
210
Demodulating Unit
TPC
β_cont
Pb_cont
Pmax info
DCH
E-DCH
Power Margin Information
TFC
βd, βc, βhs
E-TFC
βed,eff, βec
to HS-DPCCH
ACK/NACK info
ACK/NACK
Sche_grant
DCH
HS-DSCH
202
204
Transmission Rate Control Unit
TFC Selection
E-TFC Selection
203
Transmission Setting Evaluating Unit
TFC Restriction
E-TFC Restriction
TFC state
E-TFC state
TFC
βd,βc, βhs
E-TFC
βed,eff, βec
Transmit Power Information
201
Radio Resource Control Unit
Upper Layer Data
Control Information
Setting Information
HARQ profile
Control Information
Upper Layer Data

FIG.23

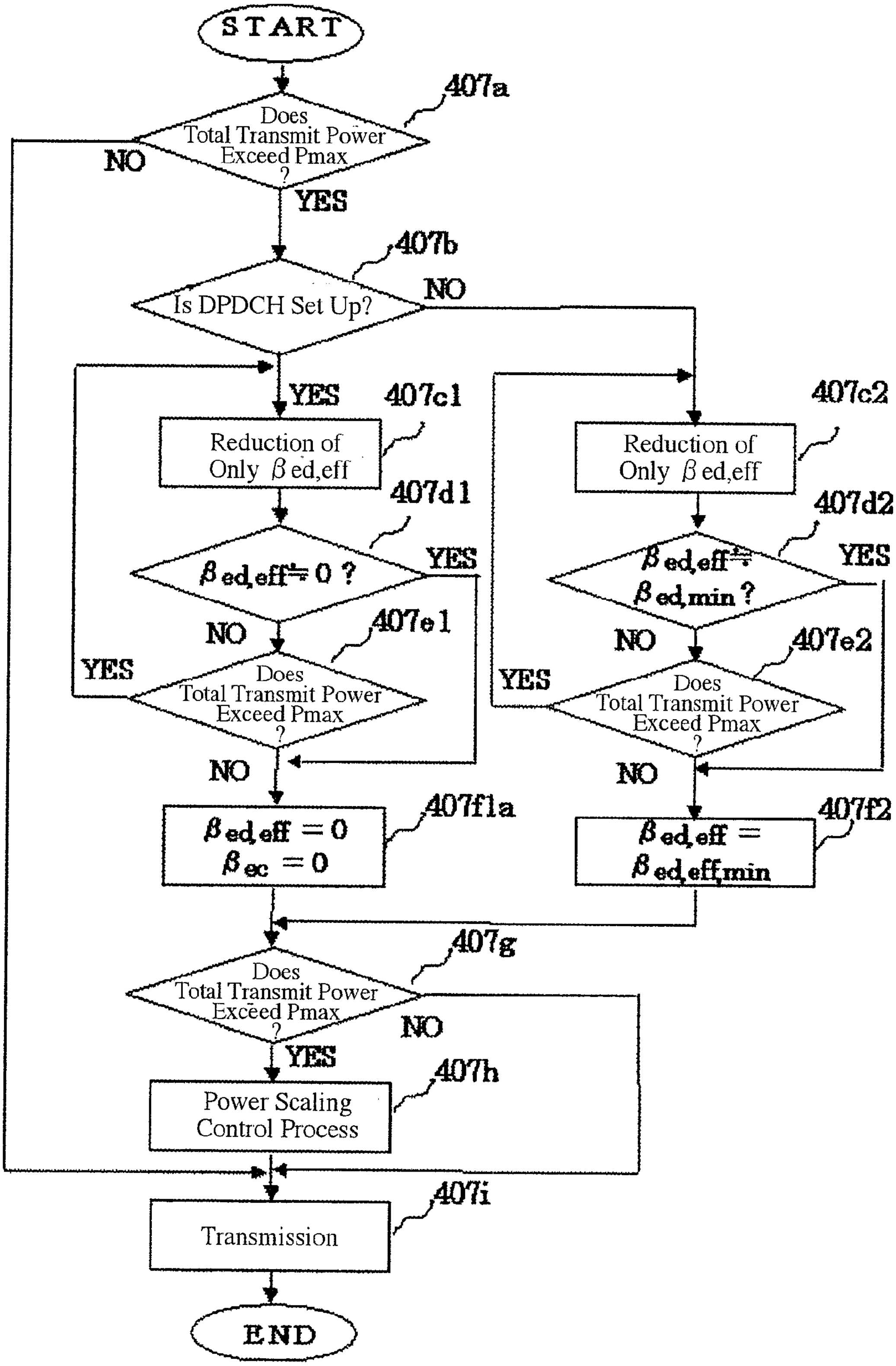
START
407a
Does Total Transmit Power Exceed Pmax ?
NO
YES
407b
Is DPDCH Set Up?
NO
YES
407c1
Reduction of Only β ed,eff
407d1
β ed,eff≒0 ?
YES
NO
407e1
YES
Does Total Transmit Power Exceed Pmax ?
NO
407f1a
β ed,eff = 0
β ec = 0
407c2
Reduction of Only β ed,eff
407d2
β ed,eff≒ β ed,min ?
YES
NO
407e2
YES
Does Total Transmit Power Exceed Pmax ?
NO
407f2
β ed,eff = β ed,eff,min
407g
Does Total Transmit Power Exceed Pmax ?
NO
YES
407h
Power Scaling Control Process
407i
Transmission
END

FIG.24

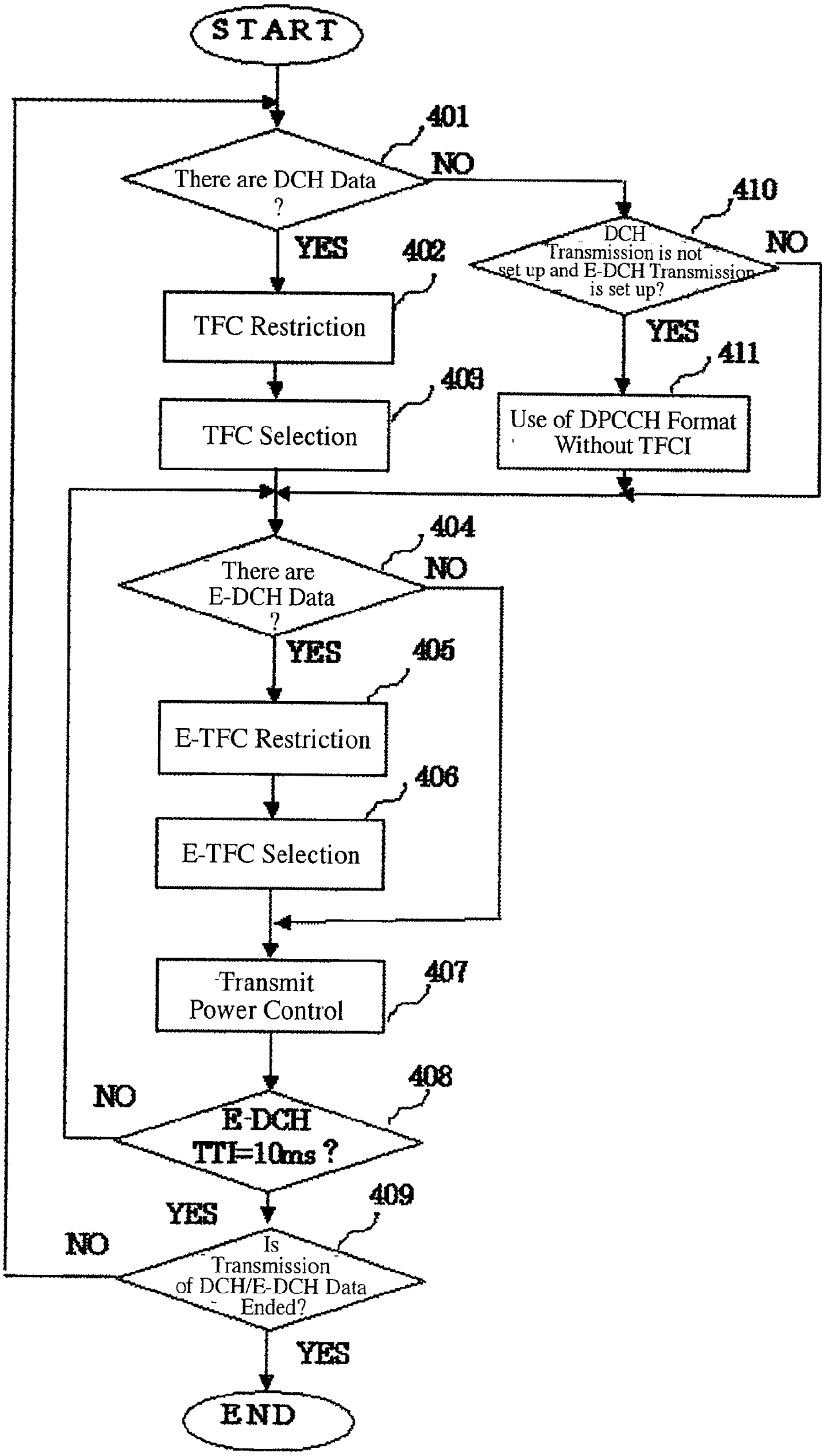
START
401
There are DCH Data ?
NO
410
DCH Transmission is not set up and E-DCH Transmission is set up?
NO
YES
402
TFC Restriction
YES
411
403
TFC Selection
Use of DPCCH Format Without TFCI
404
There are E-DCH Data ?
NO
YES
405
E-TFC Restriction
406
E-TFC Selection
Transmit Power Control
407
408
NO
E-DCH TTI=10ms ?
YES
409
NO
Is Transmission of DCH/E-DCH Data Ended?
YES
END

## INTERNATIONAL SEARCH REPORT

International application No.
PCT/JP2005/018096

A. CLASSIFICATION OF SUBJECT MATTER
*H04Q7/38*(2006.01)

According to International Patent Classification (IPC) or to both national classification and IPC

B. FIELDS SEARCHED

Minimum documentation searched (classification system followed by classification symbols)
H04B7/24-7/26, H04Q7/00-7/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-64872 A (Matsushita Electric Industrial Co., Ltd.), 10 March, 2005 (10.03.05), & WO 2005/015781 A1 & EP 1560352 A1 | 1-18 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 December, 2005 (28.12.05) | 17 January, 2006 (17.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004215276 A